Europäisches Patentamt

European Patent Office

Office européen des brevets

(11) Numéro de publication : **0 428 216 B1**

(12)

# FASCICULE DE BREVET EUROPEEN

(45) Date de publication du fascicule du brevet :
**15.02.95 Bulletin 95/07**

(51) Int. Cl.⁶ : **H04N 7/00**

(21) Numéro de dépôt : **90202955.2**

(22) Date de dépôt : **08.11.90**

(54) **Dispositif de décodage amélioré de signaux de télévision de type HD-MAC.**

(30) Priorité : **14.11.89 FR 8914903**

(43) Date de publication de la demande :
**22.05.91 Bulletin 91/21**

(45) Mention de la délivrance du brevet :
**15.02.95 Bulletin 95/07**

(84) Etats contractants désignés :
**BE DE ES FR GB IT**

(56) Documents cités :
**EP-A- 0 330 279**
**IBC '88 PROCEEDINGS OF THE INTERNA-**
**TIONAL BROADCASTING CONVENTION 23-27**
**septembre 1988, pages 62-65, IEE, Brighton,**
**GB; F.W.P. VREESWIJK et al.: "HD-MAC**
**coding of high definition television signals"**

(73) Titulaire : **LABORATOIRES D'ELECTRONIQUE**
**PHILIPS**
**22, avenue Descartes,**
**BP 15**
**F-94453 Limeil-Brévannes Cédex (FR)**
(84) **FR**
Titulaire : **Philips Electronics N.V.**
**Groenewoudseweg 1**
**NL-5621 BA Eindhoven (NL)**
(84) **BE DE ES GB IT**

(72) Inventeur : **Haghiri, Mohammad-Rèza, Société**
**Civile S.P.I.D.**
**156 Boulevard Haussmann**
**F-75008 Paris (FR)**

(74) Mandataire : **Landousy, Christian et al**
**Société Civile S.P.I.D.**
**156, Boulevard Haussmann**
**F-75008 Paris (FR)**

## Description

La présente invention concerne un dispositif de décodage de signaux de télévision préalablement codés à l'émission en vue d'une transmission sur la base d'une fréquence de trame déterminée et par l'intermédiaire d'un canal à bande passante limitée impliquant un traitement de réduction de la quantité d'informations à transmettre, de telle façon que ladite transmission soit opérée par bloc soit à un premier rythme à ladite fréquence, soit à un deuxième rythme à une fréquence deux fois plus faible, soit à un troisième rythme à une fréquence quatre fois plus faible, des informations relatives au mouvement et au rythme sélectionné ayant été également transmises.

Une précédente demande de brevet français FR-A- 2 630 283, déposée le 15 avril 1988, décrit notamment un dispositif de décodage de signaux de télévision destiné à être inclus dans la partie réception d'un système de transmission d'images de télévision à haute définition. Un tel système comprend lui-même, dans sa partie émission, un étage d'émission d'informations codées correspondant auxdites images et transmises par l'intermédiaire d'un canal analogique. Ce canal est à bande passante limitée par rapport à celle que nécessiterait la transmission de toutes les informations à haute définition. La transmission par ce canal, dit compatible puisque permettant la transmission des signaux de télévision au standard normal actuel (625 lignes, 50 Hz, 2:1) implique donc un traitement de réduction, ou de compression, de la quantité d'informations à transmettre, et ce traitement est opéré par exemple à l'aide d'un dispositif de codage tel que celui décrit dans le document cité ci-dessus.

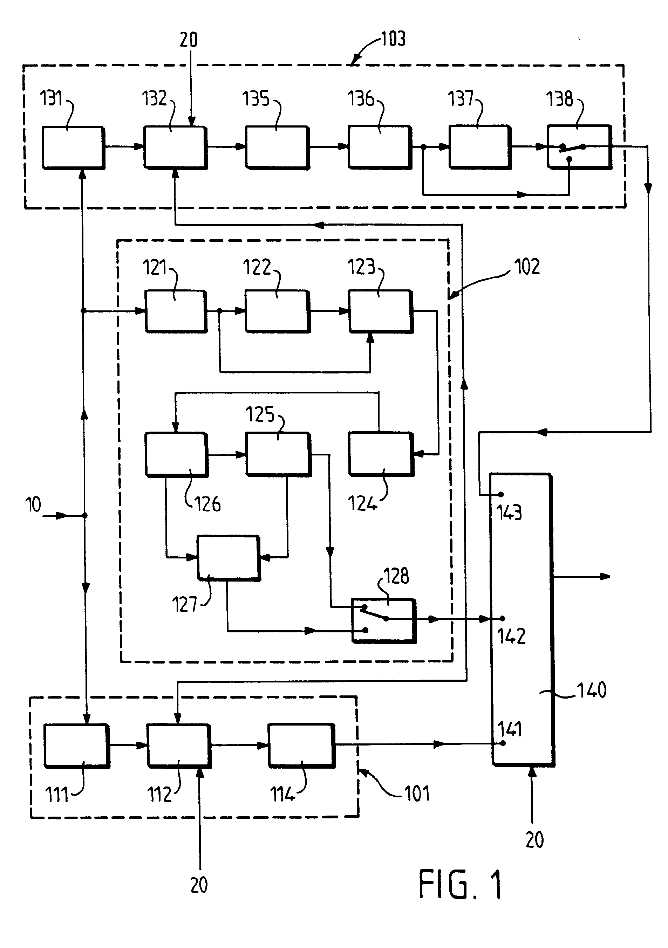

Le dispositif de décodage décrit dans cette précédente demande comprend, essentiellement, tout d'abord trois branches de traitement des informations transmises, et la figure 1, reprise dudit document, montre ces trois branches, désignées de façon générale par les références 101 à 103.

La branche 101 comprend successivement un circuit d'interpolation dynamique 111 (pour une insertion des zéros à rétablir après transmission dans le canal analogique 10, du fait du sous-échantillonnage qui a été opéré avant cette transmission), un multiplexeur 112 recevant des informations de mouvement en provenance d'un canal 20 dit d'assistance numérique (en anglais, DATV, de "Digitally-Assisted TV"), et un circuit 114 de postfiltrage spatial délivrant une image 1250 $\ell$., 50 Hz, 2:1, 1440 points/ligne.

La branche 102 comprend successivement un circuit d'interpolation dynamique 121, un circuit à retard 122, un additionneur 123 des sorties des circuits 121 et 122, un circuit de postfiltrage spatial 124, un circuit de reconstitution d'image composé de deux mémoires en série 125 et 126, recevant les informations de mouvement transmises par le canal 20, et d'un additionneur 127, et un commutateur 128, qui reçoit d'une part la sortie de la mémoire 125 et d'autre part celle de l'additionneur 127 et qui délivre également une image 1250 $\ell$., 50 Hz, 2:1, 1440 point/ligne.

La branche 103 comprend successivement un circuit d'interpolation dynamique 131, un multiplexeur 132 recevant aussi des informations de mouvement en provenance du canal 20, un filtre temporel 135, un filtre spatial 136, un circuit à retard 137, et un commutateur 138 recevant alternativement la sortie de ce circuit à retard et celle du filtre 136 pour délivrer là encore une image 1250 $\ell$., 50 Hz, 2:1, 1440 points/ligne.

Les sorties des branches 101, 102, 103 sont envoyées respectivement vers les entrées 141, 142, 143 d'un circuit d'aiguillage 140, dont le rôle est de sélectionner, en fonction d'un signal de décision également transmis par le canal 20 d'assistance numérique, celle des sorties de branche qui convient et de délivrer finalement les signaux constitutifs des images à haute définition à reconstruire.

On a précisé, plus haut, que les images d'origine, étant à haute définition, avaient dû être comprimées pour être transmises dans le canal analogique. Dans le cas du document cité, cette compression a été opérée, à l'émission, dans un dispositif de codage comprenant lui-même trois branches de traitement situées en parallèle et recevant chacune la suite des images haute définition d'origine, un circuit de prise de décision relative au rythme de transmission et destiné à délivrer à partir des images d'origine et des images traitées par lesdites branches un signal de décision envoyé vers le canal d'assistance numérique, et un circuit d'aiguillage des sorties des branches selon le signal de sortie dudit circuit de décision, ce dispositif de codage étant remarquable en ce qui concerne les points suivants :

(a) les images d'origine successives étant définies par leur rang 2k-1, 2k, 2k+1, etc... dans ladite suite, ledit dispositif de codage comprend également un étage d'estimation de mouvement destiné à délivrer des informations relatives au mouvement des blocs composant les images de parité déterminée, par exemple de rang 2k+1, par rapport aux blocs correspondants des images de parité opposée, ici de rang 2k et 2k+2, qui entourent celles-ci ;

(b) lesdites branches, destinées à délivrer trois séquences d'images comprimées contenant le même nombre d'échantillons à transmettre à la fréquence de trame, comprennent elles-mêmes chacune un filtre spatial distinct ;

(c) le circuit de prise de décision comprend, en parallèle, trois voies de calcul de distorsion entre les images d'origine et les trois images traitées respectivement disponibles en aval desdits premier, deuxième et troisième filtres spatiaux des trois branches, et un circuit de comparaison desdites trois distorsions et de sélection de l'indice de branche correspondant à la plus faible de ces distorsions, la deuxième de ces trois voies de calcul recevant lesdites informations de mouvement relatives à chaque bloc d'image en vue d'une reconstitution d'une approximation des images de parité déterminée à partir des deux images de parité opposée qui les entourent chacune.

Avec la structure de dispositif de codage ainsi définie, les images d'origine, à haute définition, comprenant ici 1152 lignes de 1440 points et divisées spatialement en blocs de 16 lignes de 16 points, sont transmises par le canal analogique selon un rythme temporel qui varie suivant le mouvement contenu dans chaque bloc. Ces trois rythmes possibles de transmission des blocs d'image sont ici les suivants :

- le rythme 20 millisecondes (20 ms), selon lequel les informations correspondant à une image sont transmises en une seule trame, à la fréquence de trame égale à 50 Hz ;
- le rythme 40 millisecondes (40 ms), selon lequel les informations sont transmises en deux trames successives, à une fréquence deux fois plus faible (25 Hz) ;
- le rythme 80 millisecondes (80 ms), selon lequel les informations sont transmises en quatre trames successives, à une fréquence quatre fois plus faible (12,5 Hz).

Pour être compatibles avec le standard MAC destiné ici à assurer leur transmission, les images à l'entrée du canal analogique comprennent 576 lignes (= 1152/2) de 720 échantillons (= 1440/2), et les deux trames composant ces images comportent donc 288 lignes de 720 points chacune. Les trames réellement transmises vont être par la suite regroupées par périodes de 80 ms, c'est-à-dire en séquences de quatre trames $T_1$, $T_2$, $T_3$, $T_4$, qui sont les trames transmises et reçues et qui constituent donc les trames d'entrée du dispositif de décodage décrit plus loin.

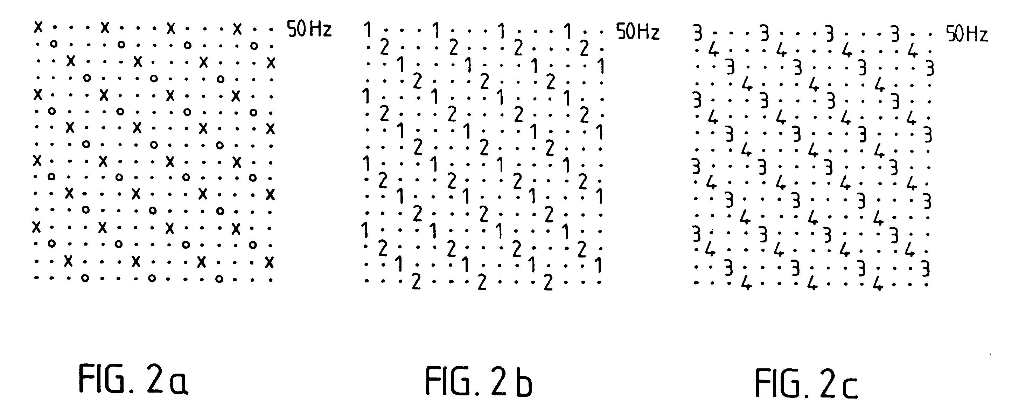

Les figures 2 à 4 rappellent, selon chacun des trois rythmes de transmission, les positions des échantillons dans les blocs à transmettre et le numéro de trame qui leur est affecté pour les récupérer lors de leur transmission. Plus précisément, sur les figures 2a à 2c qui concernent le rythme 20 ms, la figure 2a montre d'une manière générale la position des échantillons à transmettre à 50 Hz selon qu'ils appartiennent aux trames transmises $T_1$ et $T_3$ (échantillons représentés par des croix) ou bien $T_2$ et $T_4$ (échantillons représentés par des cercles). Les points indiquent sur ces figures 2a à 2c et les suivantes (3a à 3c, 4a à 4b) les échantillons manquants du bloc d'image à haute définition représenté. Les figures 2b et 2c montrent de façon spécifique, pour ce même bloc d'image, les échantillons transmis respectivement par les trames $T_1$ et $T_2$ (figure 2b) et par les trames $T_3$ et $T_4$ (figure 2c), le repérage des échantillons étant effectué à l'aide de l'indice de trame 1, 2, 3 ou 4 correspondant.

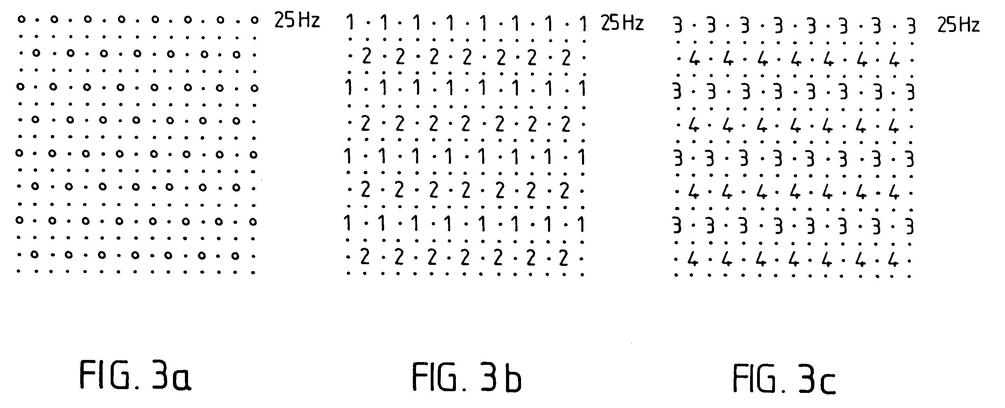

De même, la figure 3a montre d'une manière générale la position des échantillons (en nombre deux fois plus grand par rapport au cas précédent, et à transmettre à 25 Hz, en un intervalle de temps double) selon qu'ils appartiennent aux trames transmises $T_2$ et $T_4$ (cercles) ou $T_1$ et $T_3$ (des croix devant alors être substituées aux cercles), et les figures 3b et 3c montrent de façon spécifique, pour le même bloc, les échantillons transmis par les trames $T_1$ et $T_2$ (figure 3b) et par les trames $T_3$ et $T_4$ (figure 3c).

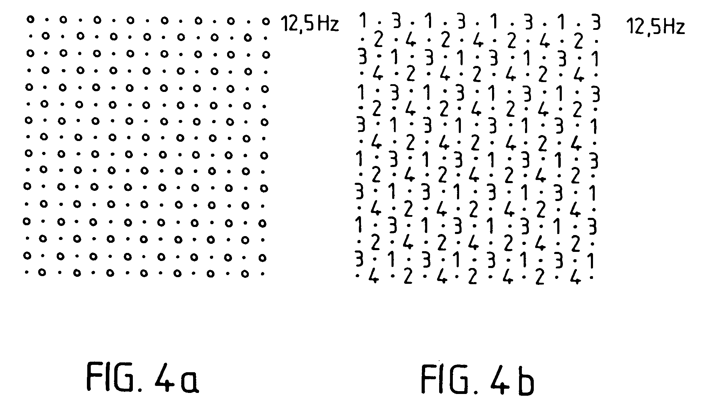

Enfin, la figure 4a montre d'une manière générale la position des échantillons (en nombre quatre fois plus grand que celui observé dans le cas de la transmission à 50 Hz, et à transmettre à 12,5 Hz, en un intervalle de temps quatre fois plus grand), et la figure 4b montre de façon spécifique, pour le même bloc, les échantillons transmis par les trames $T_1$, $T_2$, $T_3$ et $T_4$.

A ces trames $T_1$ à $T_4$ transmises, reçues successivement à l'entrée du dispositif de décodage, correspondent en sortie de ce dispositif de décodage quatre trames décodées notées $D_1$, $D_2$, $D_3$, $D_4$. Chacune de ces trames décodées peut, bien entendu, contenir des blocs d'image correspondant à l'un quelconque des rythmes possible de transmission (20, 40 ou 80 ms), puisque le codage à l'émission prévoit, en sortie des branches de traitement correspondant à chaque rythme de transmission, un aiguillage par bloc. On appellera $t_n(20)$, $t_n(40)$, $t_n(80)$ ces blocs non sous-échantillonnés, selon le rythme de 20, 40 ou 80 ms auquel ils correspondent et en désignant par n l'indice de trame. Chaque trame $T_n$ transmise contient donc en général des informations relatives aux trois rythmes 20, 40, 80 ms, et l'on désignera par $T_n(20)$, $T_n(40)$, $T_n(80)$ ces informations.

Ces désignations étant précisées, les trames décodées sont obtenues, à partir des informations transmises, de la façon suivante :

(a) le décodage de blocs $t_1(20)$ est obtenu à partir d'informations transmises $T_1(20)$, et de même celui de blocs $t_2(20)$, $t_3(20)$, $t_4(20)$, à partir d'informations transmises $T_2(20)$, $T_3(20)$, $T_4(20)$ respectivement.

(b) le décodage de blocs $t_1(40)$ est obtenu à partir d'informations transmises $T_1(40)$ et $T_2(40)$, et celui de blocs $t_3(40)$ à partir d'informations transmises $T_3(40)$ et $T_4(40)$. Les blocs relatifs aux trames décodées $D_2$ et $D_4$, dans le cas du rythme 40 ms, n'ont en effet pas été transmis, mais par contre on a transmis, pour chaque bloc manquant, l'information de mouvement (ou vecteur de déplacement) correspondante : pour chaque bloc de la deuxième trame le vecteur de déplacement $\overrightarrow{V_2}$, pour chaque bloc de la quatrième trame le vecteur de déplacement $\overrightarrow{V_4}$, etc.... Le décodage des blocs, dans ce cas du rythme 40 ms, est alors, comme on l'a vu, obtenu, pour les deuxième et quatrième trames non transmises, à l'aide d'une interpolation temporelle compensée en mouvement. Le principe de cette opération de compensation de mouvement est d'effectuer la demi-somme des trames transmises adjacentes dans la direction du mouvement estimé entre elles à l'aide des vecteurs de déplacement. Plus précisément, en utilisant les blocs des trames précédente et suivante ainsi que les vecteurs de déplacement correspondants, cette opération peut s'écrire :

$$t_2(40) = 1/2\ t_1(40) \text{ déplacé du vecteur } -\overrightarrow{V_2} + 1/2\ t_3(40) \text{ déplacé du vecteur } +\overrightarrow{V_2}$$

$$t_4(40) = 1/2\ t_3(40) \text{ déplacé du vecteur } -\overrightarrow{V_4} + 1/2\ t_5(40) \text{ déplacé du vecteur } +\overrightarrow{V_4}.$$

(c) le décodage des blocs $t_1(80)$, $t_2(80)$, $t_3(80)$, $t_4(80)$ est obtenu à partir d'informations transmises $T_1(80)$, $T_1(80$, $T_3(80)$, $T_4(80)$.

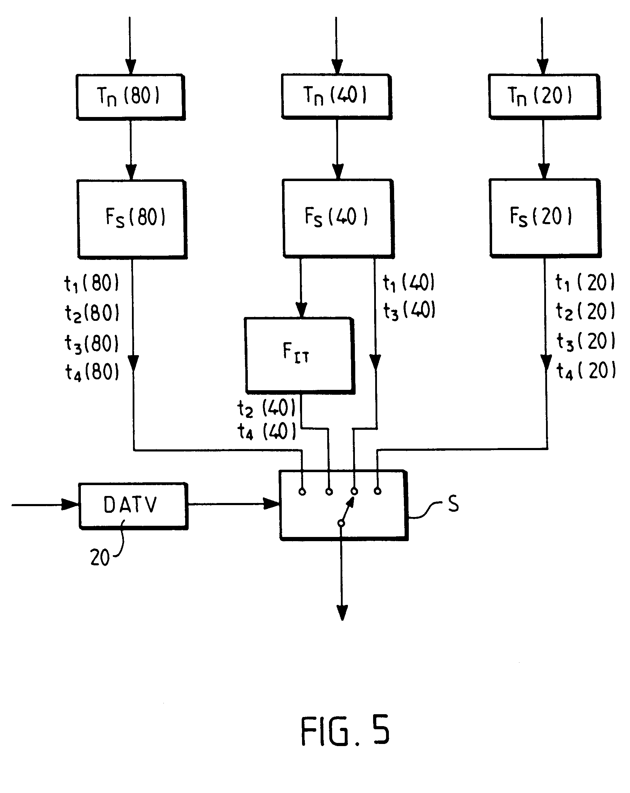

Un schéma de principe, donné sur la figure 5, permet de présenter de façon synthétique ces opérations :
- les données sous-échantillonnées $T_n(20)$, $T_n(40)$, $T_n(80)$ transmises aux rythmes respectifs de 20, 40, 80 ms sont respectivement envoyées vers des filtres d'interpolation spatiale $F_S(20)$, $F_S(40)$, $F_S(80)$ correspondants, destinés à reconstituer les échantillons absents du fait du sous-échantillonnage ;
- cette interpolation à une cadence propre à chaque rythme de transmission conduit à disposer de blocs $t_1(20)$, $t_2(20)$, $t_3(20)$, $t_4(20)$ en sortie du filtre $F_S(20)$, de blocs $t_1(80)$, $t_2(80)$, $t_3(80)$, $t_4(80)$ en sortie du filtre $F_S(80)$, et, en sortie du filtre $F_S(40)$, d'une part de blocs $t_1(40)$, $t_3(40)$ non interpolés temporellement, d'autre part de blocs $t_2(40)$, $t_4(40)$ ayant subi ladite interpolation temporelle compensée en mouvement dans un circuit référencé ici $F_{IT}$ ;
- un circuit d'aiguillage S reçoit en parallèle les blocs $t_n(40)$, interpolés ou non, les blocs $t_n(20)$ et les blocs $t_n(80)$, et sélectionne, selon le signal de sortie du circuit de prise de décision transmis par le canal d'assistance numérique 20, ceux qui correspondent au rythme de transmission.

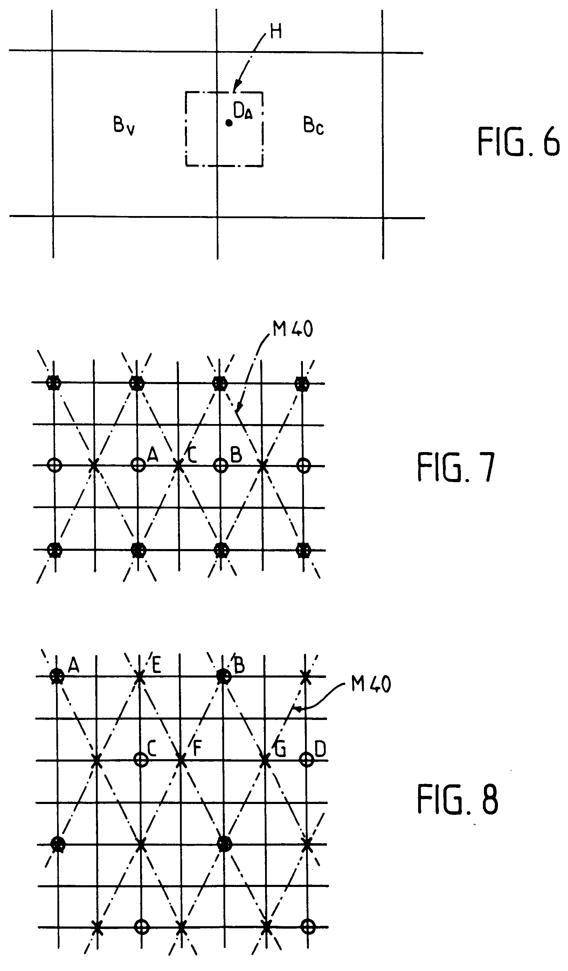

Les principes décrits jusqu'à présent présentent cependant un inconvénient, comme le montre la figure 6, lorsqu'on se trouve en bordure de bloc d'image, en raison de ce qu'on appelle l'horizon H des filtres. Le filtrage des données en bordure d'un bloc $B_c$ (pour un point filtré $D_A$ par exemple) implique parfois, en effet, de disposer de données à l'extérieur de ce bloc $B_c$ considéré, ici dans un bloc $B_V$. Or ces données extérieures ont peut-être été transmises au même rythme que celles du bloc considéré, mais ont pu également être transmises à un rythme différent, et n'ont pas, dans ce dernier cas, été échantillonnées suivant une maille d'échantillonnage compatible avec ledit filtrage. Cette situation est particulièrement gênante pour la deuxième voie de traitement restituant l'information transmise, avec le rythme de transmission 40 ms, car le processus de compensation de mouvement employé pour l'interpolation temporelle des blocs non transmis peut rejeter le point $D_A$ à l'extérieur du bloc $B_V$.

La demande de brevet français FR-A- 2 652 974, publiée le 12.04.91, a alors remédié à cet inconvénient, qui se manifeste en bordure de bloc, en proposant une solution technique permettant d'effectuer le filtrage même dans cette situation-limite. Cette solution est mise en oeuvre dans trois modes de réalisation distincts de dispositif de décodage.

Dans le premier des modes de réalisation ainsi décrits, le dispositif de décodage de signaux de télévision comprend essentiellement :

(a) six mémoires de trame en série, dont les entrées et sorties sont prévues pour délivrer sept trames successives $T_{4k+1}$ à $T_{4k+7}$ transmises par ledit canal analogique à ladite fréquence de trame ;

(b) un aiguilleur prévu pour recevoir sur sept entrées respectives lesdites sept trames successives $T_{4k+1}$ à $T_{4k+7}$ ;

(c) une première voie de décodage prévue pour recevoir les trames $T_{4k+1}$, $T_{4k+2}$, $T_{4k+3}$ ou les trames $T_{4k+1}$, $T_{4k+3}$, $T_{4k+4}$ et comprenant en série un premier circuit de restitution de maille au deuxième rythme, un premier filtre d'interpolation spatiale, et un premier circuit de compensation de mouvement ;

(d) une deuxième voie de décodage prévue pour recevoir les trames $T_{4k+1}$, $T_{4k+3}$, $T_{4k+4}$ ou les trames $T_{4k+5}$, $T_{4k+6}$, $T_{4k+7}$ et comprenant en série un deuxième circuit de restitution de maille au deuxième rythme, un deuxième filtre d'interpolation spatiale, et un deuxième circuit de compensation de mouvement, les deux circuits de compensation de mouvement étant destinés à fonctionner simultanément et uniquement une trame sur deux ;

(e) un additionneur des sorties desdites première et deuxième voies de décodage ;

(f) une troisième voie de décodage prévue pour recevoir les trames $T_{4k+1}$ à $T_{4k+4}$ et comprenant en série un circuit de reconstitution de maille au premier rythme et un troisième filtre d'interpolation spatiale ;

(g) une quatrième voie de décodage prévue pour recevoir les trames $T_{4k+1}$ à $T_{4k+4}$ et comprenant en série un circuit de reconstitution de maille au troisième rythme et un quatrième filtre d'interpolation spatiale ;

(h) en vue de la détermination finale de trames décodées $D_{4k+1}$ à $D_{4k+4}$ correspondant aux trames codées transmises $T_{4k+1}$ à $T_{4k+4}$, des moyens de commutation agencés pour sélectionner selon la trame à décoder l'une des cinq sorties constituées par les sorties des quatre voies de décodage et la sortie de l'additionneur.

Dans un deuxième mode de réalisation qui met en oeuvre la même solution mais avec un coût de réalisation plus faible dû à la simplification des circuits, le dispositif de décodage de signaux de télévision comprend essentiellement :

(a) six mémoires de trame en série, dont les entrées et sorties sont prévues pour délivrer sept trames successives $T_{4k+1}$ à $T_{4k+7}$ transmises par ledit canal analogique à ladite fréquence de trame ;

(b) un aiguilleur prévu pour recevoir sur sept entrées lesdites sept trames successives $T_{4k+1}$ à $T_{4k+7}$ ;

(c) une première voie de décodage prévue pour recevoir trois trames parmi les trames d'entrée de l'aiguilleur et comprenant en série un premier circuit de reconstitution de maille au deuxième rythme, un premier filtre d'interpolation spatiale et un circuit à retard, ladite première voie étant destinée à délivrer des informations sans compensation de mouvement ;

(d) en sortie dudit premier filtre d'interpolation spatiale, une deuxième voie de décodage comprenant en série un circuit de compensation de mouvement, une mémoire auxiliaire, et un additionneur des sorties dudit circuit de compensation de mouvement et de ladite mémoire auxiliaire, lesdites première et deuxième voies de décodage étant suivies d'un commutateur de sélection de la sortie de ladite première voie de décodage ou de la sortie de ladite deuxième voie de décodage selon la trame à décoder ;

(e) une troisième voie de décodage prévue pour recevoir les trames $T_{4k+1}$ à $T_{4k+4}$ et comprenant en série un circuit de reconstitution de maille au premier rythme et un deuxième filtre d'interpolation spatiale ;

(f) une quatrième voie de décodage prévue pour recevoir les trames $T_{4k+1}$ à $T_{4k+4}$ et comprenant en série un circuit de reconstitution de maille au troisième rythme et un troisième filtre d'interpolation spatiale ;

(g) en vue de la détermination finale de trames décodées $D_{4k+1}$ à $D_{4k+4}$ correspondant aux trames codées transmises $T_{4k+1}$ à $T_{4k+4}$, des moyens de commutation agencés pour sélectionner selon la trame à décoder soit la sortie du commutateur de sélection de la sortie de la première ou de la deuxième voie de décodage, soit la sortie de la troisième voie de décodage, soit la sortie de la quatrième voie de décodage.

Dans un troisième mode de réalisation, qui constitue le meilleur mode de mise en oeuvre de ladite solution, et dans lequel une nouvelle simplification des circuits conduit à abaisser encore le coût de réalisation, le dispositif de décodage comprend essentiellement :

(a) six mémoires de trame réparties d'une part en deux mémoires d'entrée et d'autre part en quatre mémoires intermédiaires insérées dans un élément de stockage intermédiaire et d'aiguillage ;

(b) ledit élément de stockage intermédiaire et d'aiguillage ;

(c) une première voie de décodage prévue pour recevoir trois trames parmi les trames disponibles dans ledit élément de stockage intermédiaire et d'aiguillage et comprenant en série un premier circuit de reconstitution de maille au deuxième rythme, un premier filtre d'interpolation spatiale et un circuit à retard, ladite première voie étant destinée à délivrer des informations sans compensation de mouvement ;

(d) en sortie dudit premier filtre d'interpolation spatiale, une deuxième voie de décodage comprenant en série un circuit de compensation de mouvement et un additionneur dont la première entrée est reliée à la sortie dudit circuit de compensation de mouvement et la deuxième entrée à une sortie de l'élément de stockage intermédiaire et d'aiguillage, lesdites première et deuxième voies de décodage étant suivies d'un commutateur de sélection de la sortie de ladite première voie de décodage ou de la sortie de ladite deuxième voie de décodage selon la trame en cours de décodage ;

(e) une troisième voie de décodage prévue pour recevoir les trames $T_{4k+1}$ à $T_{4k+4}$ et comprenant en série un circuit de reconstitution de maille au premier rythme et un deuxième filtre d'interpolation spatiale ;

(f) une quatrième voie de décodage prévue pour recevoir les trames $T_{4k+1}$ à $7_{4k+4}$ et comprenant en série un circuit de reconstitution de maille au troisième rythme et un troisième filtre d'interpolation spatiale ;

(g) en vue de la détermination finale de trames décodées $D_{4k+1}$ à $D_{4k+4}$ correspondant aux trames codées transmises $T_{4k+1}$ à $T_{4k+4}$, des moyens de commutation agencés pour sélectionner selon la trame à décoder soit la sortie du commutateur de sélection de la sortie de la première ou de la deuxième voie de décodage, soit la sortie de la troisième voie de décodage, soit la sortie de la quatrième voie de décodage.

Pour la mise en oeuvre de ces modes de réalisation de dispositif de décodage, il faut, on l'a vu, pouvoir opérer, avant interpolation, une reconstitution de la maille d'échantillonnage à 40 ms, et ce quel que soit le type du bloc $B_V$ (voir la figure 6) voisin du bloc $B_C$ considéré. Pour cette reconstitution dans tous les cas de figure possibles, on procède de la façon suivante, en liaison avec les figures 7 et 8 (qui sont des fragments d'image maillée montrant le mode de reconstruction de la maille d'échantillonnage à 40 ms à l'intérieur d'un bloc d'image 80 ms et à l'intérieur d'un bloc d'image 20 ms) et avec les figures 9a à 9d (qui montrent respectivement les schémas de décodage de quatre trames successives) et la figure 9e (qui récapitule sur un même schéma les opérations de décodage relatives à ces quatre trames).

Pour reconstituer la maille 40 ms à l'intérieur d'un bloc 80 ms (notée M40 sur la figure 7), on utilise une interpolation des données à 80 ms ($T_1(80)$ et $T_3(80)$) respectivement transportées par les trames $T_1$ et $T_3$. Sur la figure 7 montrant un fragment d'image maillée, ces données $T_1(80)$ et $T_3(80)$ transmises sont représentées par un cercle, et les noeuds de la maille 40 ms par une croix. On constate que les données $T_1$ (80) et $T_3(80)$ ne fournissent directement que la moitié des noeuds de la maille 40 ms, le long d'une ligne sur deux seulement (dans le cas de la figure, le long des première et troisième lignes, où les croix peuvent être observées en surcharge des cercles). Les noeuds manquants (points de type C, représentés ici par une croix, sur la deuxième ligne) sont obtenus par une interpolation horizontale, selon une expression du type $C = (1/2) A + (1/2) B$ où A et B sont les données 80 ms (cercles) encadrant les noeuds manquants (croix).

Pour reconstituer la maille 40 ms à l'intérieur d'un bloc 20 ms (là encore, notée M40 sur la figure 8), on utilise cette fois une interpolation des données T(20), transmises par la trame $T_3$ dans le cas présent. Les noeuds de la maille M40, représentés sur la figure 8 par une croix, sont alors obtenus comme suit :

A = donné directement par $T_3(20)$, données transmises et représentées sur la figure 8 par un cercle.
E = (1/2) A + (1/2) B
F = (3/4) C + (1/4) D
G = (1/4) C + (3/4) D

E, F, G étant les noeuds manquants dans la maille 40 ms à reconstituer.

Pour reconstituer la maille 40 ms à l'intérieur d'un bloc 40 ms, on dispose tout naturellement, en raison de la transmission effectuée, des données nécessaires. Enfin, pour reconstituer ladite maille 40 ms à la jonction de deux blocs correspondant à des rythmes de transmission différents, les noeuds manquants sont comme précédemment obtenus par une interpolation horizontale du type $A = bB + cC$ où A est le noeud de la maille à reconstituer, B et C les noeuds des données transmises les plus proches de A, et b et c les coefficients de pondération correspondant aux positions respectives des noeuds B et C par rapport au noeud A, sur la même ligne horizontale.

Le tableau 1 ci-dessous récapitule, pour chaque trame décodée $D_1$, $D_2$, $D_3$, $D_4$, les données transmises nécessaires à la reconstitution de la maille 40 ms :

## TABLEAU 1

|  |  |
|---|---|
|  | $T_1(80)$, $T_3(80)$ |
| $D_1$ | $T_1(40)$, $T_2(40)$ |
|  | $T_3(20)$ |
|  |  |
|  | $T_1(80)$, $T_3(80)$ |
| $D_2$ | $T_1(40)$, $T_2(40)$, $T_3(40)$, $T_4(40)$ |
|  | $T_3(20)$ |
|  |  |
|  | $T_1(80)$, $T_3(80)$ |
| $D_3$ | $T_1(40)$, $T_3(40)$ |
|  | $T_3(20)$ |
|  |  |
|  | $T_1(80)$, $T_3(80)$ |
| $D_4$ | $T_3(40)$, $T_4(40)$, $T_5(40)$, $T_6(40)$ |
|  | $T_3(20)$, $T_7(20)$ |

On a vu précédemment, par ailleurs (en liaison avec la figure 5), l'existence des filtres d'interpolation $F_S(20)$ et $F_S(80)$. Le tableau 2 ci-dessous récapitule, pour chaque trame décodée $D_1$ à $D_4$, les données trans-

mises nécessaires pour le filtrage effectué par $F_S(80)$ :

### TABLEAU 2

| | | |
|---|---|---|
| $D_1$ | : | $T_1(80)$, $T_2(80)$, $T_3(80)$, $T_4(80)$ |
| $D_2$ | : | $T_1(80)$, $T_2(80)$, $T_3(80)$, $T_4(80)$ |
| $D_3$ | : | $T_1(80)$, $T_2(80)$, $T_3(80)$, $T_4(80)$ |
| $D_4$ | : | $T_1(80)$, $T_2(80)$, $T_3(80)$, $T_4(80)$ |

et, de même, le tableau 3 récapitule pour chaque trame décodée $D_1$ à $D_4$ les données transmises nécessaires pour le filtrage effectué par $F_S(20)$ :

### TABLEAU 3

| | | |
|---|---|---|
| $D_1$ | : | $T_1(20)$ |
| $D_2$ | : | $T_2(20)$ |
| $D_3$ | : | $T_3(20)$ |
| $D_4$ | : | $T_4(20)$ |

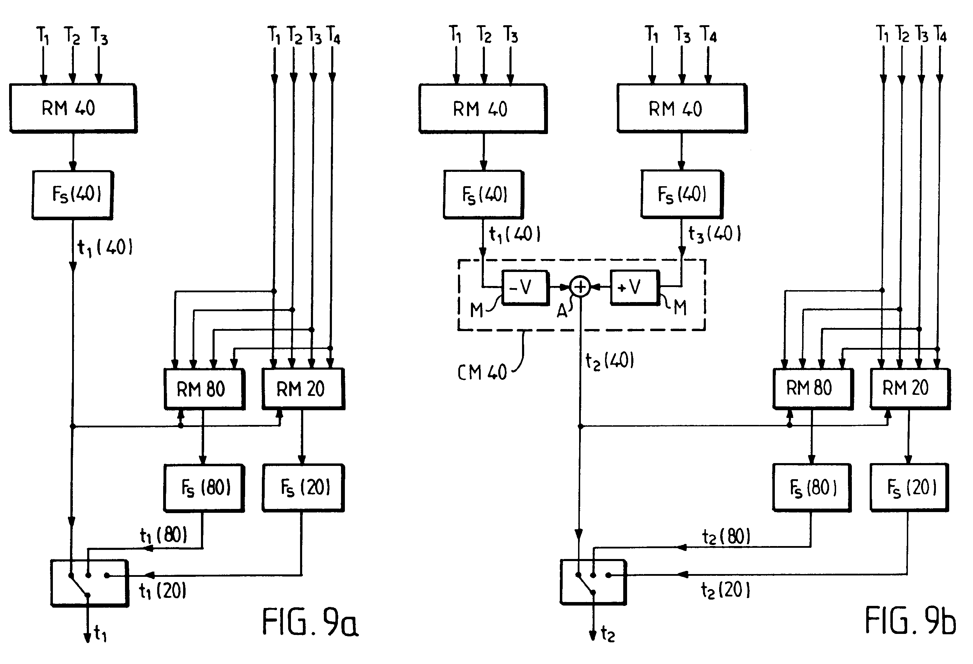

En reprenant alors les indications données par ces tableaux, on en déduit que la trame $D_1$ est obtenue selon le schéma de décodage suivant, représenté sur la figure 9a où apparaissent les fonctions suivantes :
- reconstitution de maille 40 ms, notée RM40, à partir des trames transmises $T_1$, $T_2$, $T_3$ (voir le tableau 1), et selon les indications de la figure 7 ou de la figure 8 comme il a été décrit précédemment ;
- interpolation spatiale, réalisée par un filtre d'interpolation spatiale de type $F_S(40)$ tel que cité plus haut, à partir de la maille 40 ms reconstituée, ladite interpolation conduisant à disposer de blocs décodés $t_1(40)$ ;
- reconstitution des mailles 20 ms et 80 ms, notées RM 20 et RM 80, à partir des trames transmises $T_1$, $T_2$, $T_3$ $T_4$ ;
- interpolations spatiales notées IS 20 et IS 80 et réalisées par les filtres $F_S(20)$ et $F_S(80)$ cités plus haut, à partir des mailles 20 ms et 80 ms, pour disposer de bloc décodés $t_1(20)$ et $t_1(80)$ ;
- sélection des blocs $t_1(20)$, $t_1(40)$, $t_1(80)$ de sortie des filtres d'interpolation $F_S(20)$, $F_S(40)$, $F_S(80)$, chaque bloc $t_1(20)$ ou $t_1(40)$ ou $t_1(80)$ étant sélectionné selon l'indication fournie par le signal de sortie du circuit de décision, qui est transmis par le canal d'assistance numérique 20, ladite sélection conduisant à disposer finalement des différents blocs successifs de la trame à décoder, et donc de la trame décodée elle-même, $D_1$ dans le cas de cette figure 9a.

De même, la trame $D_2$ est obtenue selon un schéma de décodage similaire, représenté sur la figure 9b et sur lequel apparaissent cette fois les fonctions suivantes (celles qui sont identiques aux précédentes sont repérées par les mêmes références et sont indiquées comme telles ci-dessous) :
- reconstitution de maille RM 40 (fonction identique) ;
- interpolation spatiale par filtre $F_S(40)$ (fonction identique), conduisant à disposer de blocs $t_1(40)$ ;
- reconstitution de maille RM 40 à partir des trames transmises $T_1$, $T_3$, $T_4$ et interpolation spatiale réalisée également par un filtre $F_S(40)$, ces deux opérations conduisant cette fois à disposer de blocs $t_3(40)$ ;
- reconstitutions RM 20 et RM 80 (fonctions identiques) et interpolations spatiales par filtres $F_S(20)$ et $F_S(80)$ (fonctions identiques), conduisant à disposer de blocs $t_2(20)$ et $t_2(80)$ respectivement ;
- compensation de mouvement, notée CM 40 et prélevant lesdits blocs $t_1(40)$ et $t_3(40)$ correspondant aux trames d'origine transmises, ainsi que leur voisinage, pour délivrer, à partir de ces blocs et de leur voisinage et en tenant compte des informations de mouvement transmises par le canal 20 d'assistance numérique, les blocs $t_2(40)$ correspondant aux trames d'origine non transmises, ladite compensation consistant en l'occurrence à effectuer, dans un additionneur A prévu en sortie de deux mémoires M recevant lesdites informations de mouvement V transmises en vue de permettre un décalage de $\pm$ V, la demi-somme des blocs $t_1(40)$ et $t_3(40)$ compte tenu du mouvement intervenu entre les trames auxquelles ces blocs correspondent ;
- à partir des blocs compensés $t_2(40)$, ainsi que des blocs $t_2(20)$ ou $t_2(80)$ délivrés comme précédemment, sélection (fonction identique) selon le signal de sortie du circuit de décision, pour disposer finalement de la trame décodée $D_2$.

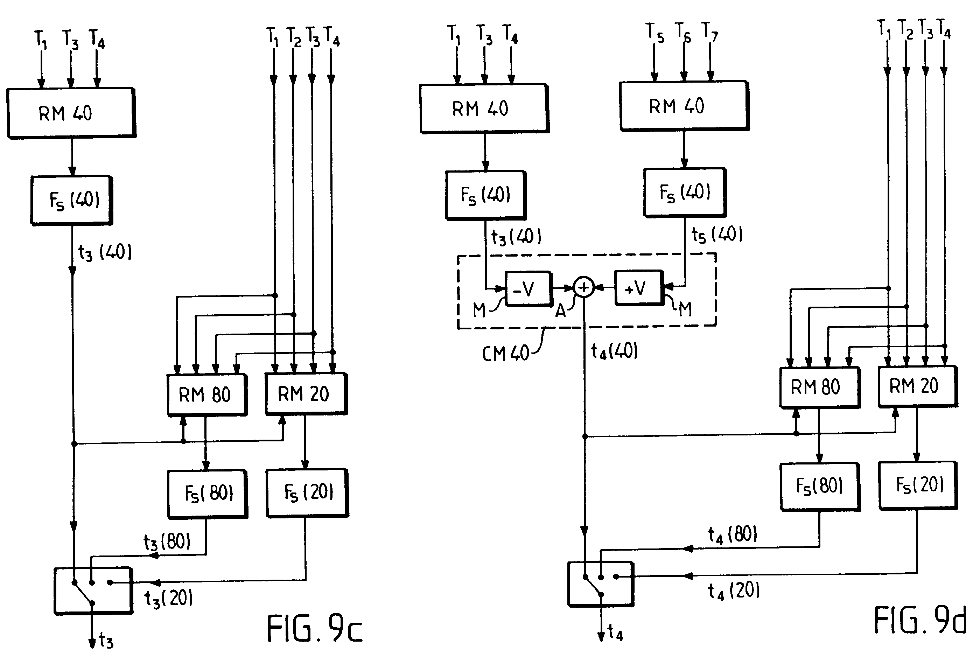

La trame $D_3$ est obtenue selon un schéma de décodage identique à celui permettant d'obtenir la trame $D_1$, comme le montre la figure 9c, sur laquelle les seules différences par rapport à la figure 9a portent sur les points suivants :

- la reconstitution de maille RM 40 est opérée cette fois à partir des trames transmises $T_1$, $T_3$, $T_4$ ;
- les blocs de sortie des filtres d'interpolation $F_S(20)$, $F_S(40)$, $F_S(80)$ sont maintenant notés $t_3(20)$, $t_3(40)$, $t_3(80)$.

Enfin, la trame $D_4$ est obtenue selon un schéma de décodage identique à celui permettant d'obtenir la trame $D_2$, à une exception près. En effet, comme le montre la figure 9d correspondante, les trames transmises utilisées pour les reconstitutions de maille RM 40 sont respectivement les suivantes : $T_1$, $T_3$, $T_4$ pour les blocs $t_3(40)$ comme précédemment, et $T_5$, $T_6$, $T_7$ pour les blocs $t_5(40)$. Il faut en effet, dans ce quatrième cas du décodage conduisant à la trame décodée $D_4$, utiliser non plus seulement le lot des quatre trames transmises $T_1$ à $T_4$, mais également faire appel au lot suivant de quatre nouvelles trames transmises $T_5$, $T_6$, $T_7$, $T_8$.

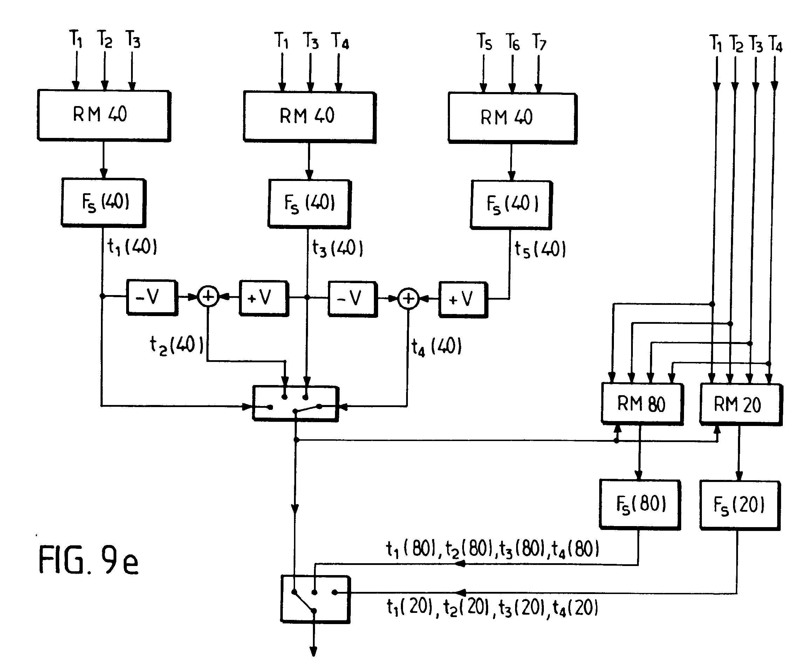

En définitive, on peut regrouper sur un même schéma les opérations de décodage des figures 9a à 9d, ce qui conduit au schéma d'ensemble de la figure 9e, dont la structure est évidente à partir de la superposition des quatre figures 9a à 9d. On notera que, pour effectuer ces opérations de décodage, il faut faire appel à des données appartenant à sept trames transmises $T_1$, $T_2$, $T_3$, $T_4$, $T_5$, $T_6$, $T_7$ ($T_{4k+1}$ à $T_{4k+7}$ dans le cas général).

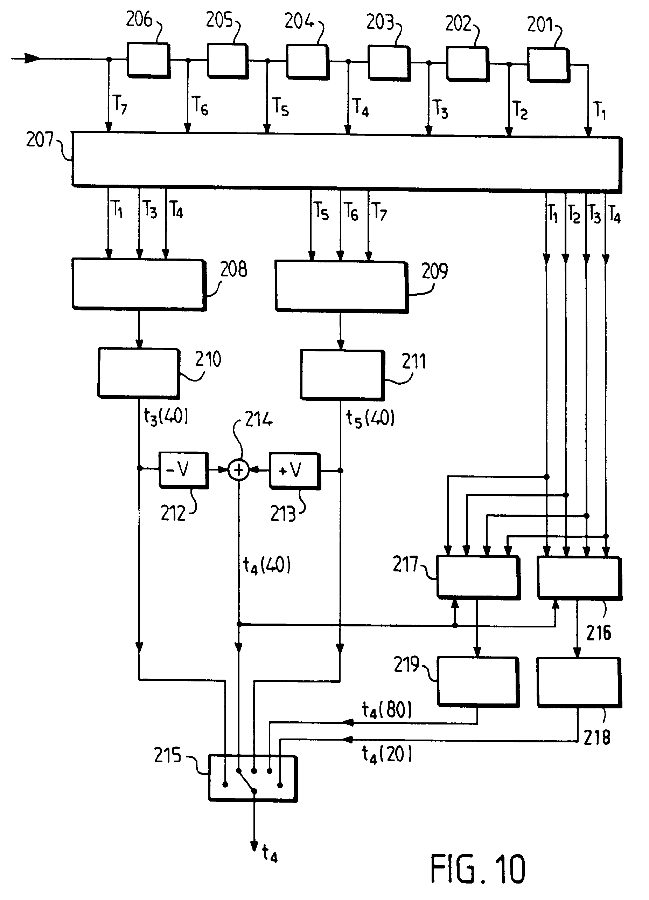

Pour obtenir ces trames $T_1$ à $T_7$, six mémoires de trame doivent être prévues. La figure 10 montre le premier mode de réalisation de dispositif de décodage évoqué précédemment. Ce dispositif comprend d'abord six mémoires de trames 201 à 206, dont les six sorties délivrent, dans le cas du décodage de la trame $D_4$, les trames transmises $T_1$ à $T_6$ respectivement, et sur les six entrées desquelles sont alors présentes les trames transmises $T_2$ à $T_7$ respectivement. Un aiguilleur 207, prévu pour prélever au moment opportun les entrées et/ou sorties de mémoire qui conviennent, reçoit, par l'intermédiaire de sept connexions appropriées reliées à celles de ces entrées ou sorties qui conviennent, les sept trames $T_1$ à $T_7$.

Les trames $T_1$, $T_3$, $T_4$ sont fournies à un premier circuit 208 de reconstitution de maille au deuxième rythme (40 ms dans la présente description), et les trames $T_5$, $T_6$, $T_7$ à un deuxième circuit 209 similaire. Ces circuits 208 et 209 sont suivis d'un premier et d'un deuxième filtre d'interpolation spatiale 210 et 211, puis d'un premier et d'un deuxième circuit de compensation de mouvement 212 et 213 dont les sorties constituent les deux entrées d'un additionneur 214. Par ailleurs, les trames $T_1$ à $T_4$ sont fournies à deux circuits 216 et 217 de reconstitution de maille au premier et au troisième rythme de transmission (20 et 80 ms dans le cas présent), eux-mêmes suivis respectivement de filtres d'interpolation spatiale 218 et 219. Un commutateur 215 sélectionne ensuite, en fonction du numéro de la trame et du rythme de transmission de l'information présente à décoder, soit la sortie de l'additionneur 214, soit la sortie du filtre 218, soit la sortie du filtre 219, l'information ainsi sélectionnée correspondant respectivement aux blocs $t_4(40)$, $t_4(20)$ et $t_4(80)$. Dans le cas du décodage des trames $D_2$, ce commutateur 215 effectue la même sélection. Dans le cas du décodage des trames $D_1$ ou $D_3$ pour lesquelles n'intervient pas la compensation de mouvement, le commutateur 215 permet de sélectionner directement les sorties des filtres 210 ou 211, chacune de ces deux sorties pouvant fournir les blocs $t_3(40)$ ou $t_5(40)$.

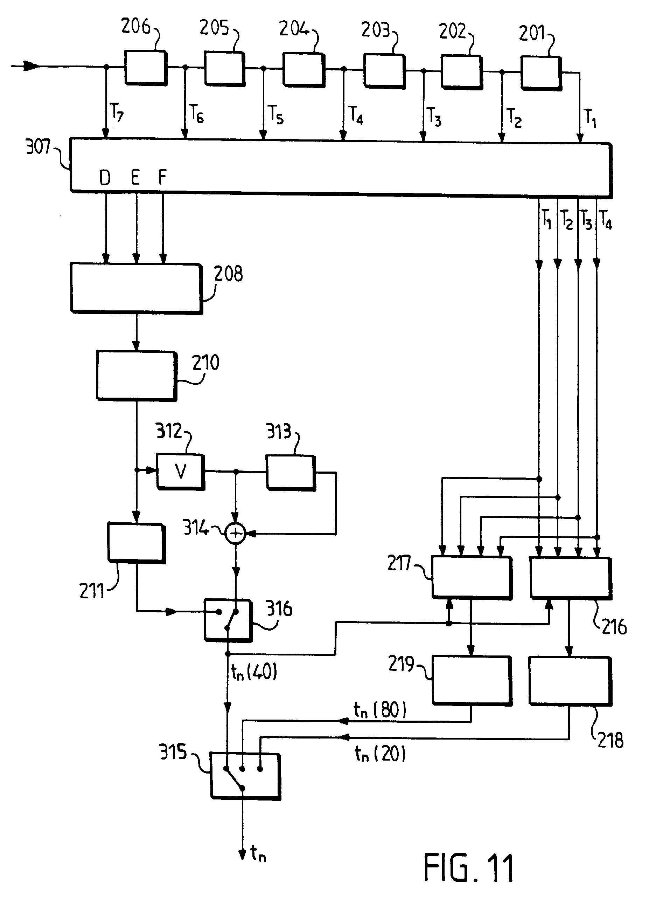

Dans le deuxième mode de réalisation représenté sur la figure 11, le dispositif de décodage comprend toujours les six mémoires de trame 201 à 206 et les troisième et quatrième voies de décodage incluant les circuits 216 à 219. Un aiguilleur 307 remplace l'aiguilleur 207 de la figure 10. Le dispositif de décodage comprend par ailleurs une première voie de décodage sans compensation de mouvement, prélevant des trames notées D, E, F et comprenant en série un circuit 208 de reconstitution de maille au deuxième rythme (40 ms), un filtre d'interpolation spatiale 210, et un circuit à retard 211. Les trames D, E, F sont les trames $T_1$, $T_2$, $T_3$ pour le décodage de la trame $D_1$, les trames $T_1$, $T_3$, $T_4$ pour le décodage des trames $D_2$ et $D_3$, et les trames $T_5$, $T_6$, $T_7$ pour le décodage de la trame $D_4$.

Le dispositif de décodage comprend également une deuxième voie de décodage avec compensation de mouvement, recevant la sortie de la première voie de décodage et comprenant un circuit de compensation de mouvement 312, qui reçoit la sortie du filtre d'interpolation spatiale 210, une mémoire auxiliaire 313, qui reçoit la sortie du circuit de compensation de mouvement 312, un additionneur 314 des sorties dudit circuit de compensation de mouvement 312 et de la mémoire auxiliaire 313, et un commutateur 316 sélectionnant selon la trame à décoder la sortie de la première voie de décodage ou celle de la deuxième, c'est-à-dire soit la sortie du circuit à retard 211 (ce circuit permet de disposer du même retard que dans la voie de décodage avec compensation de mouvement), soit la sortie de l'additionneur 314. Un commutateur 315 permet à son tour de sélectionner soit la sortie du commutateur 316 (blocs de type $t_n(40)$), soit la sortie de la troisième voie de décodage (blocs de type $t_n(20)$), soit la sortie de la quatrième voie de décodage (blocs de type $t_n(80)$), et donc de délivrer finalement les trames décodées $D_1$ à $D_4$.

La structure du mode de réalisation de la figure 11 peut être justifiée de la façon suivante. On remarquera, dans le cas de la figure 10, que le décodage des blocs $t_1(40)$ et $t_3(40)$ ne nécessite qu'un seul circuit de reconstitution de maille, un seul filtre d'interpolation spatiale, et aucune compensation de mouvement (voir aussi les figures correspondantes 9a et 9c), tandis que le décodage des blocs $t_2(40)$ et $t_4(40)$ nécessite deux circuits de reconstitution de maille, deux filtres d'interpolation spatiale et deux circuits de compensation de mouvement (voir les figures correspondantes 9b et 9d). Plus précisément, lors du décodage des blocs $t_2(40)$, on doit calculer :

$$(1/2)\ t_1(40) \text{ compensé du vecteur - } \overrightarrow{V_2} \qquad (1/2)\ t_3(40) \text{ compensé du vecteur + } \overrightarrow{V_2}$$

et, lors du décodage des blocs $t_4(40)$, on doit de même calculer :

$$(1/2)\ t_3(40) \text{ compensé du vecteur - } \overrightarrow{V_4} \qquad (1/2)$$

$t_5(40)$ compensé du vecteur + $\overrightarrow{V_4}$.

On établit alors qu'il est possible d'opérer le décodage de la façon suivante :

(A) décodage des blocs $t_1(40)$ :

(a) une reconstitution de maille au deuxième rythme (40 ms) et une interpolation spatiale permettent d'obtenir l'information $t_1(40)$ à partir des trames $T_1$, $T_2$, $T_3$, présentes à l'entrée de cette voie ;

(b) une compensation de mouvement fournit le terme $t_1(40)$ compensé du vecteur $-V_2$, qui est alors mis en mémoire.

(B) décodage des blocs $t_2(40)$ :

(a) les mêmes circuits qu'en (A) (a) assurent la reconstitution de maille au deuxième rythme (40 ms) et l'interpolation spatiale, en vue d'obtenir l'information $t_3(40)$ à partir des trames $T_1$, $T_3$, $T_4$ ;

(b) la compensation de mouvement permet d'obtenir le terme $t_3(40)$ compensé du vecteur + $\overrightarrow{V_2}$, et la demi-somme de ce terme $t_3(40)$ ainsi compensé du vecteur + $\overrightarrow{V_2}$ et de celui qui a été précédemment mis en mémoire (c'est-à-dire $t_1(40)$ compensé du vecteur - $\overrightarrow{V_2}$) conduit finalement à l'information $t_2(40)$.

(C) décodage des blocs $t_3(40)$ :

(a) de même, une reconstitution de maille 40 ms et une interpolation spatiale permettent d'obtenir l'information $t_3(40)$ à partir des trames $T_1$, $T_3$, $T_4$ ;

(b) la compensation de mouvement permet d'obtenir le terme $t_3(40)$ compensé du vecteur - $\overrightarrow{V_4}$, qui est à son tour mis en mémoire.

(D) décodage des blocs $t_4(40)$ :

(a) de même, une reconstitution de maille 40 ms et une interpolation spatiale permettent d'obtenir l'information $t_5(40)$ à partir des trames $T_5$, $T_6$, $T_7$ maintenant présentes à l'entrée de la voie de décodage ;

(b) la compensation de mouvement permet d'obtenir le terme $t_5(40)$ compensé du vecteur + $\overrightarrow{V_4}$, et la demi-somme de ce terme et de celui qui a été précédemment mis en mémoire conduit finalement à l'information $t_4(40)$.

(E) des moyens de commutation permettent alors, comme précédemment, d'opérer la sélection des informations $t_1(40)$, $t_2(40)$, $t_3(40)$, ou $t_4(40)$.

Ce résultat final est donc obtenu dans un dispositif de décodage (celui de la figure 11) qui, par rapport à celui de la figure 10, présente quelques circuits en moins, mais également une mémoire supplémentaire (la mémoire 313). Cette mémoire supplémentaire est supprimée dans le troisième mode de réalisation évoqué plus haut, qui a la structure suivante, à savoir que ladite mémoire auxiliaire 313, quatre des six mémoires de trame 201 à 206 et l'aiguilleur 307 sont remplacés par un élément de stockage intermédiaire et d'aiguillage, dont les caractéristiques vont être décrites de manière détaillée ci-dessous.

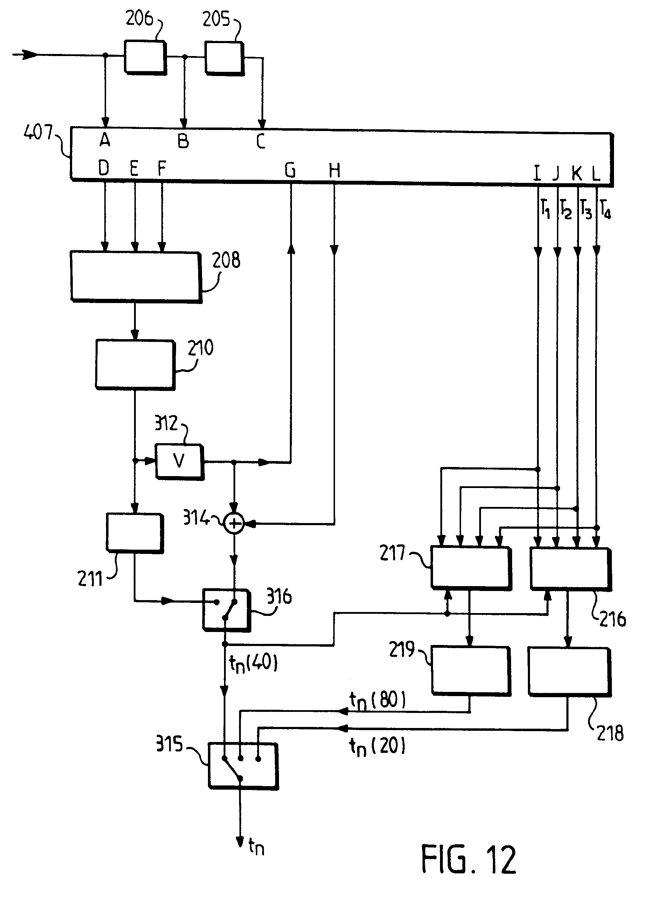

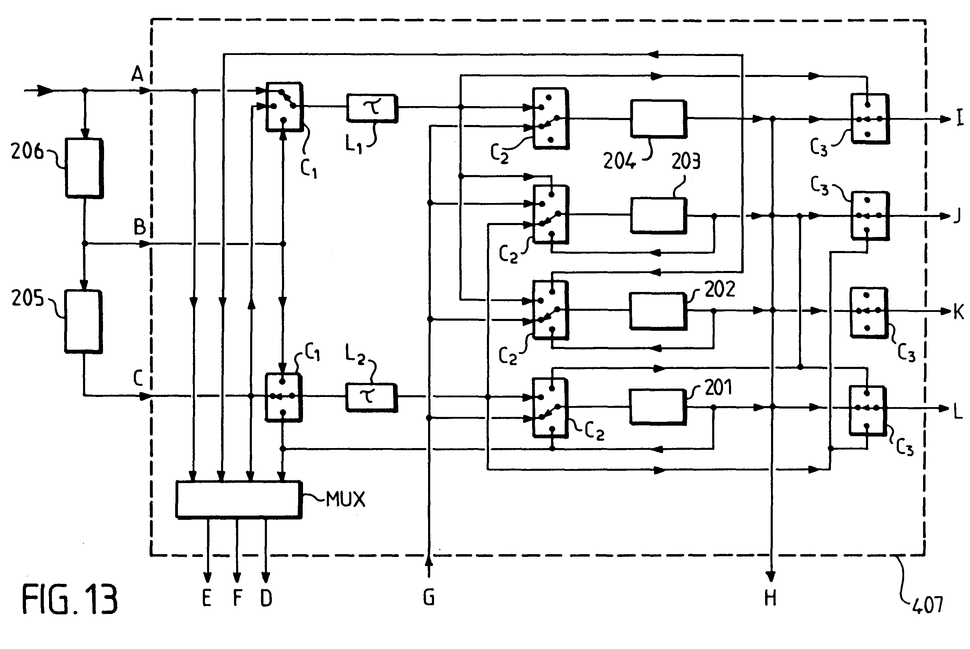

Plus précisément, le dispositif de décodage comprend, selon ce mode de réalisation préférentiel représenté sur la figure 12, sensiblement les mêmes éléments que le dispositif de décodage de la figure 11, sauf en ce qui concerne la deuxième voie de décodage, dont la mémoire auxiliaire 313 est supprimée. Les mémoires de trame 201 à 204 (non apparentes sur la figure 12, mais représentées ultérieurement sur les figures 13 à 15d) sont maintenant localisées à l'intérieur d'un élément de stockage intermédiaire et d'aiguillage 407, et remplissent d'une part le rôle de lignes à retard qui leur était déjà dévolu sur les figures 10 et 11 et d'autre part le rôle de la mémoire 313 de la figure 11. Les autres éléments (première, troisième et quatrième voies de décodage, et les commutateurs) sont inchangés par rapport à la figure 11 et conservent les mêmes références.

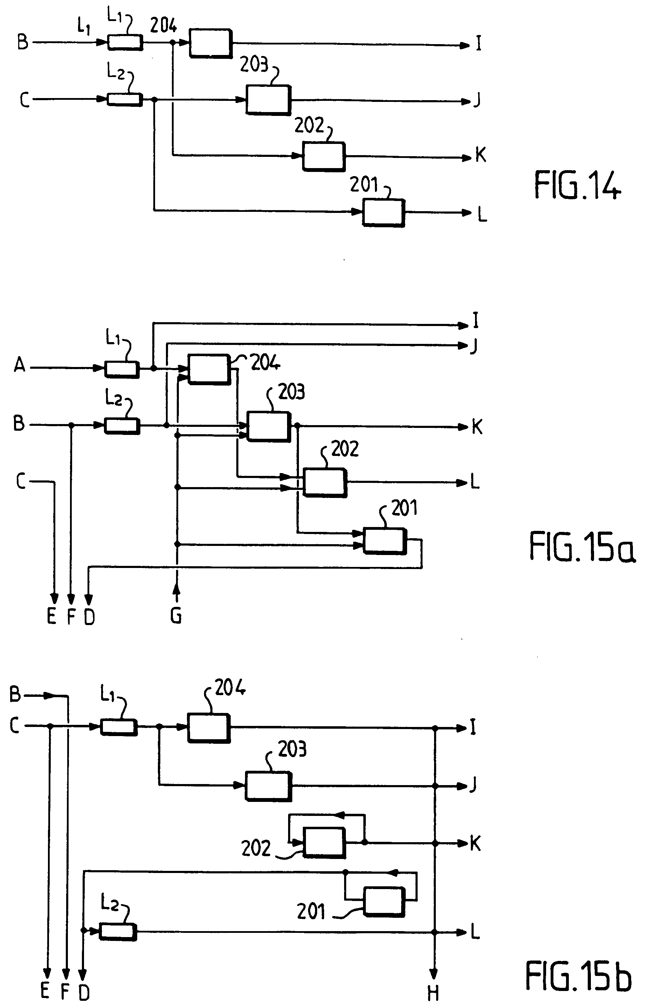

La figure 13 est une représentation plus détaillée de la structure de l'élément de stockage intermédiaire et d'aiguillage 407, dont on a désigné par des lettres, de A à L, les entrées et les sorties. Cet élément 407 comprend trois entrées A, B, C, reliées respectivement à l'entrée de la mémoire de trame 206, à la sortie de celle-ci, et à la sortie de la mémoire de trame 205. Les connexions entre les sorties D à L et les autres circuits du dispositif de décodage sont précisées ci-dessous, en liaison avec la description du fonctionnement de l'élément 407, décrit maintenant en détail en considérant un intervalle de temps de 100 millisecondes pendant lequel se succèdent cinq trames, et qui comprend cinq étapes de 20 millisecondes mises en évidence en référence aux figures 14 et 15a à 15d respectivement.

La première étape est une étape d'initialisation, et les quatre autres étapes permettent le décodage des trames $D_1$, $D_2$, $D_3$, $D_4$ respectivement. Ces quatre étapes de décodage se reproduisent cycliquement, tandis que l'étape d'initialisation n'est réalisée qu'une seule fois au début du décodage d'une émission de télévision.

Pendant l'étape d'initialisation, décrite en se référant à la figure 14, les deux premières trames $T_1$ et $T_2$ correspondant aux premières trames à décoder de l'émission de télévision sont présentes en sortie des mémoires de trame 205 et 206 (voir les figures 12 et 13), et donc fournies aux entrées C et B de l'élément intermédiaire 407. De ces entrées, elles sont dirigées, par l'intermédiaire de lignes à retard $L_2$ et $L_1$ introduisant un retard $\tau$, vers les quatre mémoires de trame 201 et 204 où elles sont écrites, respectivement la trame $T_1$ dans les mémoires 201 et 203 et la trame $T_2$ dans les mémoires 202 et 204.

Le tableau suivant (tableau 4) rassemble ces informations écrites dans l'élément de stockage intermédiaire 407 pendant la première étape d'initialisation et met en évidence que les informations correspondant aux trois rythmes 80 ms, 40 ms et 20 ms sont inscrites dans des zones mémoire distinctes $Z_1$, $Z_2$, $Z_3$, des mémoires 201 à 204 :

## TABLEAU 4

| Zones mémoire : | $Z_1$ | $Z_2$ | $Z_3$ |
|---|---|---|---|
| Mémoire 201 | $T_{1R}(80)$ | $T_{1R}(40)$ | $T_{1R}(20)$ |
| "      " 202 | $T_{2R}(80)$ | $T_{2R}(40)$ | $T_{2R}(20)$ |
| "      " 203 | $T_{1R}(80)$ | $T_{1R}(40)$ | $T_{1R}(20)$ |
| "      " 204 | $T_{2R}(80)$ | $T_{2R}(40)$ | $T_{2R}(20)$ |

L'indice R indique que l'opération d'écriture est retardée d'une durée $\tau$ par rapport aux informations présentes sur les entrées (ici B et C). La présence des deux lignes à retard $L_1$ et $L_2$ et cette opération d'écriture retardée sont justifiées plus loin.

Pendant la deuxième étape, qui est celle du décodage de la trame $D_1$ et qui est décrite en se référant à la figure 15a, les trames $T_2$, $T_3$, $T_4$ sont présentes respectivement en sortie de la mémoire 205, en sortie de la mémoire 206, et à l'entrée de cette dernière (voir les figures 12 et 13), et fournies aux entrées C, B, A de l'élément de stockage intermédiaire 407.

Le contenu de la mémoire 201 (c'est-à-dire la trame $T_1$ écrite dans l'étape précédente) est lu en synchronisme avec les trames $T_2$ et $T_3$ présentes sur C et B, et ces trames $T_1$, $T_2$, $T_3$ sont envoyées vers les sorties D, E, F qui fournissent les informations nécessaires à la reconstitution de la maille 40 ms (et rappelées dans le tableau 1).

Le contenu des mémoires 203 et 202 (c'est-à-dire $T_1$ et $T_2$, d'après l'étape précédente d'initialisation) est lu avec un retard $\tau$ par rapport à la lecture de la mémoire 201. Comme par ailleurs le retard des lignes $L_2$ et $L_1$, recevant respectivement la trame $T_3$ présente sur B et la trame $T_4$ présente sur A, est égal à $\tau$, les trames $T_1$, $T_2$, $T_3$, $T_4$ peuvent être fournies simultanément aux points K, L, J, I respectivement, pour alimenter les circuits de reconstitution de maille au premier et au troisième rythme. Les informations ainsi fournies sont rappelées dans les tableaux 3 et 2 respectivement.

Simultanément, la sortie M du circuit de compensation de mouvement 312 fournit les termes $t_1(40)$ compensés du vecteur $\overrightarrow{V_2}$ , qui sont alors envoyés vers le point G de l'élément de stockage intermédiaire 407, pour être écrits dans les zones $Z_2$ des mémoires 201 à 204. Toujours simultanément, les informations $T_1(80)$ et $T_2(80)$, stockées lors de l'étape précédente dans les mémoires 203 et 204, sont transférées dans les mémoires 201 et 202.

Le tableau suivant (tableau 5) rassemble les informations lues pendant cette deuxième étape de décodage

de la trame $D_1$ :

## TABLEAU 5

| Zones mémoire : | $Z_1$ | $Z_2$ | $Z_3$ |
|---|---|---|---|
| Mémoire 201 | $T_1(80)$ | $T_1(40)$ | $T_1(20)$ |
| "    " 202 | $T_{2R}(80)$ | $T_{2R}(40)$ | $T_{2R}(20)$ |
| "    " 203 | $T_{1R}(80)$ | $T_{1R}(40)$ | $T_{1R}(20)$ |
| "    " 204 | $T_{2R}(80)$ | $T_{2R}(40)$ | $T_{2R}(20)$ |

tandis que le tableau suivant (tableau 6) rassemble les informations écrites pendant cette même deuxième étape :

## TABLEAU 6

| Zones mémoire : | $Z_1$ | $Z_2$ | $Z_3$ |
|---|---|---|---|
| Mémoire 201 | $T_{1R}(80)$ | $(1/4)t_{1R}(40)V_2$ | |
| "    " 202 | $T_{2R}(80)$ | $(1/4)t_{1R}(40)V_2$ | $T_{2R}(20)$ |
| "    " 203 | $T_{3R}(80)$ | $(1/4)t_{1R}(40)V_2$ | |
| "    " 204 | $T_{4R}(80)$ | $(1/4)t_{1R}(40)V_2$ | |

Comme pour le tableau 4, l'indice R dans les tableaux 5 et 6 signale l'existence d'un retard $\tau$ pour l'exécution de l'opération indiquée.

Pendant la troisième étape, qui est celle du décodage de la trame $D_2$ et qui est décrite en se référant à la figure 15b, le contenu de la mémoire 201 est lu en synchronisme avec les trames $T_3$ et $T_4$ apparaissant aux points C et B respectivement. On obtient alors en D, E, F les informations nécessaires à la reconstitution de la maille 40 ms conformément au tableau 1.

Le contenu de la mémoire 201 est conservé, car il doit être utilisé au cours des étapes suivantes. Le contenu des mémoires 202 à 204 est lu avec un retard $\tau$ par rapport aux informations d'entrée. Cette lecture et la sortie de la ligne à retard $L_2$ fournissent aux points I, J, K, L les informations suivantes : d'une part les termes $t_1(40)$ compensés du vecteur $\overrightarrow{V_2}$ et précédemment mémorisés dans les mémoires $M_1$, $M_2$, $M_3$, $M_4$, ces termes étant alors envoyés vers l'additionneur 314, et d'autre part les informations nécessaires aux circuits de reconstitution de maille au premier et au troisième rythme.

Les tableaux 7 et 8 rassemblent les informations respectivement lues et écrites pendant cette troisième étape de décodage de la trame $D_2$ :

## TABLEAU 7

| Zones mémoire : | $Z_1$ | $Z_2$ | $Z_3$ |
|---|---|---|---|
| Mémoire 201 | $T_1(80)$ | $(1/4)t_{1R}(40)V_2$ | |
| "  " 202 | $T_{2R}(80)$ | $(1/4)t_{1R}(40)V_2$ | $T_{2R}(20)$ |
| "  " 203 | $T_{3R}(80)$ | $(1/4)t_{1R}(40)V_2$ | |
| "  " 204 | $T_{4R}(80)$ | $(1/4)t_{1R}(40)V_2$ | |

## TABLEAU 8

| Zones mémoire : | $Z_1$ | $Z_2$ | $Z_3$ |
|---|---|---|---|
| Mémoire 201 | $T_1(80)$ | | |
| "  " 202 | $T_{2R}(80)$ | | |
| "  " 203 | $T_{3R}(80)$ | $T_{3R}(40)$ | $T_{3R}(20)$ |
| "  " 204 | $T_{3R}(80)$ | $T_{3R}(40)$ | $T_{3R}(20)$ |

L'indice R indique comme précédemment un retard $\tau$ pour l'exécution de l'opération accompagnée de cet indice.

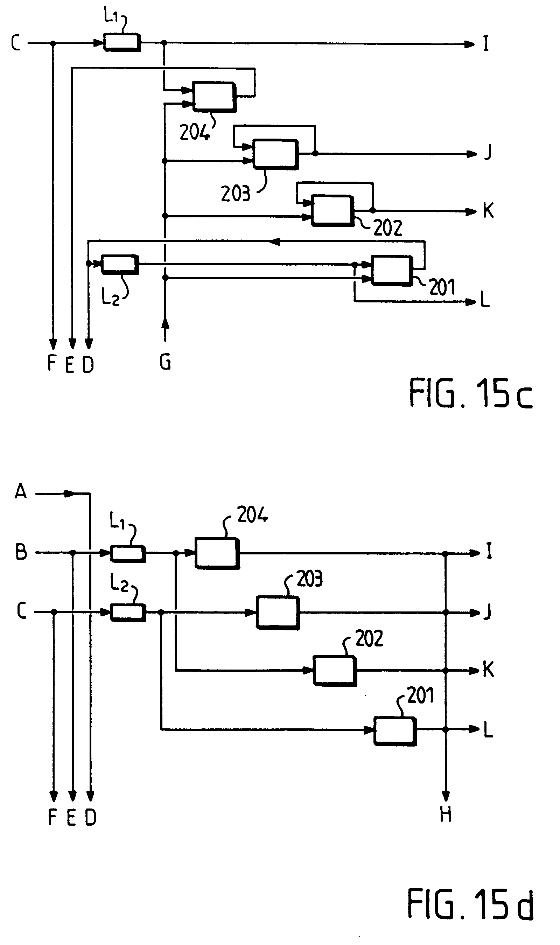

Pendant la quatrième étape, qui est celle du décodage de la trame $D_3$ et qui est décrite en se référant à la figure 15c, le contenu des mémoires 201 et 204 est lu en synchronisme avc la trame $T_4$ présente maintenant au point C. On obtient alors en D, E, F les informations nécessaires à la reconstitution de la maille 40 ms. Le contenu des mémoires 202 et 203 est lu avec un retard $\tau$ par rapport aux informations d'entrée. Cette lecture et les sorties des lignes à retard $L_1$ et $L_2$ fournissent aux points I, J, K, L les informations nécessaires aux circuits de reconstitution de maille au premier et au troisième rythme.

Simultanément, le circuit de compensation de mouvement fournit les termes $t_3(40)$ compensés du vecteur $\overrightarrow{V_4}$, qui sont alors mémorisés dans les mémoires 201 à 204. Les informations $T_1(80)$, $T_2(80)$, $T_3(80)$ sont conservées dans les mémoires 201 à 203.

Les tableaux 9 et 10 rassemblent les informations respectivement lues et écrites pendant cette quatrième étape de décodage de la trame $D_3$ :

## TABLEAU 9

| Zones mémoire : | $Z_1$ | $Z_2$ | $Z_3$ |
|---|---|---|---|
| Mémoire 201 | $T_1(80)$ | | |
| "  " 202 | $T_{2R}(80)$ | | |
| "  " 203 | $T_{3R}(80)$ | $T_{3R}(40)$ | $T_{3R}(20)$ |
| "  " 204 | $T_3(80)$ | $T_3(40)$ | |

TABLEAU 10

| Zones mémoire : | $Z_1$ | $Z_2$ | $Z_3$ |
|---|---|---|---|
| Mémoire 201 | $T_{1R}(80)$ | $(1/4)t_{3R}(40)V_4$ | |
| " " 202 | $T_{2R}(80)$ | $(1/4)t_{3R}(40)V_4$ | |
| " " 203 | $T_{3R}(80)$ | $(1/4)t_{3R}(40)V_4$ | |
| " " 204 | $T_{4R}(80)$ | $(1/4)t_{3R}(40)V_4$ | $T_{4R}(20)$ |

Pendant la cinquième étape, qui est celle du décodage de la trame $D_4$ et qui est décrite en se référant à la figure 15d, ce sont cette fois les trames $T_5$, $T_6$, $T_7$ qui sont disponibles aux points C, B, A pour permettre la reconstitution de maille 40 ms. De façon similaire à ce qui a été effectué au cours de la troisième étape, le contenu des mémoires 201 à 204 est lu avec un retard $\tau$ par rapport aux informations d'entrée. Cette lecture conduit à disposer, aux points I, J, K, L, d'une part des termes $t_3(40)$ compensés du vecteur $\overrightarrow{V_4}$ et précédemment mémorisés dans les mémoires 201 à 204, ces termes étant alors envoyés vers l'additionneur 314, et d'autre part des informations nécessaires aux circuits de reconstitution de maille au premier et au troisième rythme.

Par ailleurs, de façon tout à fait similaire à ce qui a été fait au cours de la première étape d'initialisation, la trame $T_5$ est mémorisée dans les mémoires 201 et 203 et la trame $T_6$ dans les mémoires 202 et 204. Les tableaux 11 et 12 rassemblent les informations respectivement lues et écrites pendant cette cinquième étape de décodage de la trame $D_4$ :

TABLEAU 11

| Zones mémoire : | $Z_1$ | $Z_2$ | $Z_3$ |
|---|---|---|---|
| Mémoire 201 | $T_{1R}(80)$ | $(1/4)\ t_{3R}(40)V_4$ | |
| " " 202 | $T_{2R}(80)$ | $(1/4)\ t_{3R}(40)V_4$ | |
| " " 203 | $T_{3R}(80)$ | $(1/4)\ t_{3R}(40)V_4$ | |
| " " 204 | $T_{4R}(80)$ | $(1/4)\ t_{3R}(40)V_4$ | $T_{4R}(20)$ |

TABLEAU 12

| Zones mémoire : | $Z_4$ | $Z_5$ | $Z_6$ |
|---|---|---|---|
| Mémoire 201 | $T_{5R}(80)$ | $T_{5R}(40)$ | $T_{5R}(20)$ |
| " " 202 | $T_{6R}(80)$ | $T_{6R}(40)$ | $T_{6R}(20)$ |
| " " 203 | $T_{5R}(80)$ | $T_{5R}(40)$ | $T_{5R}(20)$ |
| " " 204 | $T_{6R}(80)$ | $T_{6R}(40)$ | $T_{6R}(20)$ |

On peut maintenant, comme annoncé plus haut, justifier la présence des deux lignes à retard $L_1$ et $L_2$ et

le décalage d'une valeur de retard $\tau$ de l'écriture en mémoire. En se référant à la figure 12, la valeur $\tau$ correspond à la somme des retards dûs à la restitution de la maille 40 ms (circuit 208), à l'interpolation spatiale (circuit 210), et à la compensation de mouvement (circuit 312). Cette valeur $\tau$ correspond également au décalage temporel entre les sorties D, E, F et I, J, K, L de l'élément 407, ainsi qu'au décalage temporel entre sa sortie H et ses sorties D, E, F. L'observation des figures 14 et 15a à 15d et des tableaux 5 à 12 montre également que les retards des lignes $L_1$ et $L_2$ et les décalages des lectures et écritures des mémoires 201 à 204 conduisent à un décalage correct entre les sorties D, E, F et les sorties H, I, J, K, L.

Sur la figure 13, des commutateurs notés $C_1$, $C_2$, $C_3$ commandés à la fréquence de trame et prévus dans l'élément 407 de stockage intermédiaire et d'aiguillage assurent, ainsi que le multiplexeur MUX, aux instants appropriés, l'aiguillage correct des trames reçues circulant à travers cet élément. Ces commutateurs, représentés de façon distincte sur la figure, pourraient alternativement être regroupés dans un même circuit de commutation assurant de façon similaire les basculements appropriés vers les mémoires intermédiaires 201 à 204, les lignes à retard $L_1$, $L_2$ et les sorties D, E, F, H, I, J, K, L de l'élément 407.

Pour résumer la description précédente, le dispositif de décodage comprend donc, quel que soit celui des trois modes de réalisation proposés dans ladite demande FR-A- 2 652 974, publiée le 12.04.91, les sous-ensembles suivants :

(a) des mémoires de trames, pour le stockage des images d'entrée entrelacées compatibles (625 lignes, 50 hertz, 2:1) à un rythme de 13,5 Mbits/seconde ;

(b) des circuits de reconstitution des trois types de mailles d'échantillonnage (rythmes 20, 40 et 80 millisecondes) correspondant respectivement aux figures 2a, 3a, 4a, en utilisant d'une façon appropriée les données stockées dans lesdites mémoires de trames ;

(c) des circuits de filtrage spatial, pour l'interpolation des échantillons manquants de ces mailles d'échantillonnage ;

(d) des circuits de compensation de mouvement, utilisés pour la reconstruction des trames paires $T_2$ et $T_4$ traitées dans la voie 40 millisecondes, cette compensation étant réalisée selon le principe déjà rappelé de la demi-somme des trames adjacentes ($T_1$ et $T_3$ pour $T_2$ ; $T_3$ et $T_5$ pour $T_4$ ; etc...) dans la direction du mouvement estimé entre elles par l'intermédiaire des vecteurs de déplacement ;

(e) un sous-ensemble de commutation destiné à sélectionner, en fonction du signal de décision transmis par le canal d'assistance numérique DATV, l'un des signaux provenant des voies 20, 40, 80 millisecondes.

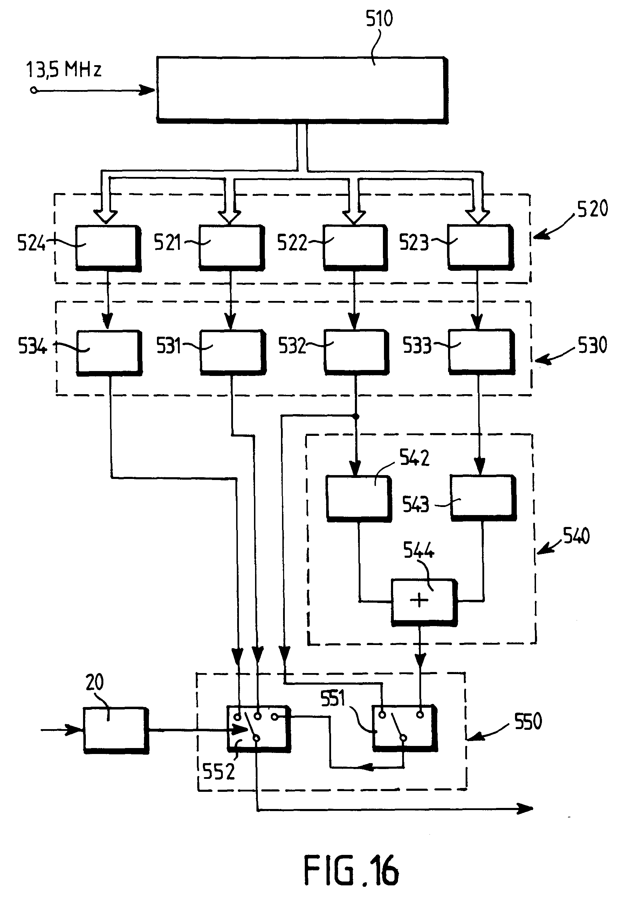

La mise en oeuvre des fonctions ainsi définies peut être exprimée de façon schématique sur la figure 16. Le dispositif de décodage ainsi représenté comprend en effet :

(a) un sous-ensemble de mémorisation 510 contenant lesdites mémoires de trames et qui reçoit les données transmises, ici à la fréquence de 13,5 MHz ;

(b) un sous-ensemble de reconstitution de maille 520, qui inclut un circuit 521 de reconstitution de maille 20 ms, des circuits 522 et 523 de reconstitution de maille 40 ms, et un circuit 524 de reconstitution de maille 80 ms, chacun des circuits de ce sous-ensemble étant relié aux mémoires appropriées du sous-ensemble 510 ;

(c) un sous-ensemble de filtrage spatial 530, qui inclut de même des circuits de filtrage 531 à 534 placés en sortie des circuits de reconstitution de maille 521 à 524 respectivement ;

(d) un sous-ensemble de compensation de mouvement 540, comprenant deux mémoires 542 et 543, adressées par les vecteurs de déplacement transmis par le canal d'assistance numérique 20, et un additionneur 544 des sorties de ces mémoires ;

(e) un sous-ensemble de commutation 550, destiné ici à sélectionner soit la sortie du circuit de filtrage 531 de la voie 20 ms, soit celle du circuit de filtrage 534 de la voie 80 ms, soit celle du circuit de filtrage 532, soit celle de l'additionneur 544, ledit sous-ensemble de commutation comprenant à cet effet un commutateur 551, fonctionnant à une fréquence de 25 Hz, et un commutateur 552, fonctionnant à une fréquence de 54 MHz.

Lorsque la trame à décoder est la première ou la troisième trame (trame obtenue en sortie du commutateur 552 = $D_1$ ou $D_3$), les circuits utilisés pour la restitution de $D_1$ et $D_3$ sont respectivement, en sortie du sous-ensemble de mémorisation 510 :

- les circuits 521 et 531 de la voie 20 ms ;
- les circuits 524 et 534 de la voie 80 ms ;
- les circuits 522, 532 de la voie 40 ms sans compensation de mouvement, suivis du commutateur 551.

Dans le cas de la restitution d'une trame paire $D_2$ ou $D_4$, les circuits utilisés comprennent toujours les circuits 521, 531 de la voie 20 ms et les circuits 524, 534 de la voie 80 ms, mais la voie 40 ms est cette fois-ci à compensation de mouvement et utilise les deux branches de cette voie, à savoir :

- les circuits 522, 532 et la mémoire 542 ;
- les circuits 523, 533 et la mémoire 543 ;

- l'additionneur 544, suivi du commutateur 551.

On a donc constaté précédemment, d'une part que, du point de vue de la complexité du dispositif, le décodage de la trame $D_4$ était particulièrement coûteux en circuits, puisqu'il implique de faire appel à deux interpolations compensées en mouvement pour disposer de $t_4(40)$ et à des données appartenant à sept trames pour reconstituer les mailles 40 ms dans les troisième et cinquième trames, et d'autre part que le sous-ensemble de compensation et l'un des circuits de filtrage (le circuit 533, en l'occurrence) n'étaient utilisés que pour la reconstruction d'une trame sur deux, pour obtenir les trames décodées $D_2$ et $D_4$.

Le but de l'invention est de proposer un dispositif de décodage dans lequel est effectuée une utilisation plus rationnelle des circuits lors de ladite reconstruction, le nombre des circuits et leur complexité étant en outre sensiblement réduits, et ces mesures étant adoptées sans altération de la qualité des images.

A cet effet, l'invention concerne un dispositif de décodage caractérisé en ce qu'il comprend :

(A) un sous-ensemble de mémorisation, comprenant lui-même des mémoires de trame en série et prévu pour recevoir, par bloc, lesdits signaux et les retarder de façon appropriée avant un aiguillage sélectif vers les voies de décodage dudit dispositif ;

(B) un sous-ensemble de reconstitution de mailles et de filtrage, agencé pour opérer, par bloc et en fonction dudit rythme sélectionné, la restitution des trames des images d'origine et comprenant lui-même une première, une deuxième et une troisième voie de décodage, prévues pour recevoir des trames disponibles dans ledit sous-ensemble de mémorisation et comprenant elles-mêmes chacune un circuit de filtrage spatial ;

(C) un sous-ensemble de compensation de mouvement, prévu pour recevoir lesdites informations de mouvement et, alternativement, stocker de façon temporaire un signal dit de compensation de mouvement pendant la restitution de trames de parité déterminée ou participer, à l'aide dudit signal de compensation de mouvement, à la restitution des trames de parité opposée, ledit sous-ensemble comprenant lui-même une quatrième voie de décodage avec compensation de mouvement, prévue en sortie du sous-ensemble de mémorisation et comprenant un circuit de filtrage spatial, une mémoire dont l'adressage est réalisé par lesdites informations de mouvement, et, en sortie de cette mémoire, deux branches en parallèle comprenant l'une un circuit de commutation et l'autre une connexion de liaison avec une première entrée d'un additionneur, le circuit de filtrage spatial de la deuxième voie étant couplé avec une deuxième entrée dudit additionneur ;

(D) un commutateur prévu pour sélectionner selon le rythme de transmission correspondant à chaque bloc la sortie de la première voie, une sortie en provenance de la deuxième voie, ou la sortie de la troisième voie.

Avec la structure de dispositif ainsi proposée, le sous-ensemble de compensation de mouvement est plus simple et, en outre, fonctionne de façon continue. Ces résultats sont dûs au fait que le dispositif de décodage anticipe l'opération de compensation de mouvement en engendrant un demi-signal compensé et en le stockant temporairement, pendant une période trame (ici, 20 ms), dans l'étage de mémorisation auxiliaire, pour l'additionner avec le demi-signal compensé suivant. Au lieu d'effectuer l'opération de compensation de mouvement à la moitié de la fréquence des trames et avec un fonctionnement intermittent du sous-ensemble de compensation de mouvement, cette opération est réalisée à la fréquence trame, par demi-compensations successives venant se compléter deux à deux, et avec un fonctionnement régulier dudit sous-ensemble.

D'autre part, comme on souhaite limiter par principe (pour une raison de coût) le nombre des mémoires, le demi-signal compensé évalué par anticipation est sous-échantillonné d'un facteur 2 (selon une structure en quinconce ligne, ce qui ne dégrade pas la résolution spatiale des images dans la voie correspondant au deuxième rythme de transmission) avant d'être stocké dans l'étage de mémorisation auxiliaire et n'est à nouveau interpolé spatialement qu'après sa restitution par ledit étage, préalablement à son addition au demi-signal compensé suivant.

Les particularités et avantages de l'invention vont maintenant apparaître de façon plus précise au cours de la description qui suit, ainsi que dans les dessins annexés, donnés à titre d'exemples non limitatifs et dans lesquels, les figures 1 à 16 étant des rappels relatifs aux solutions antérieures à l'invention :

- la figure 1 montre un exemple de dispositif de décodage à trois structures d'échantillonnage spatio-temporel adaptées aux vitesses de déplacement constatées sur les images, et comprenant de ce fait, en parallèle, trois branches de traitement des informations transmises à décoder ;

- les figures 2 à 4 rappellent, selon celui des trois rythmes de transmission qui est associé auxdites structures d'échantillonnage, les positions des échantillons dans les blocs d'image à transmettre et le numéro de trame qui leur est affecté pour les repérer lors de leur transmission ;

- la figure 5 est un schéma de principe destiné à mettre en évidence les principales opérations effectuées au décodage ;

- la figure 6 montre de façon très agrandie un bloc d'image et une fraction des blocs d'images qui l'entourent, afin de préciser les problèmes de filtrage en bordure de bloc ;
- les figures 7 et 8 sont des fragments d'image maillée qui montrent le mode de reconstruction de la maille d'échantillonnage correspondant au rythme de transmission intermédiaire (40 ms ici), respectivement à l'intérieur d'un bloc correspondant au rythme de transmission le plus lent et à l'intérieur d'un bloc correspondant au rythme de transmission le plus rapide ;
- les figures 9a à 9d montrent respectivement les schémas de décodage des première, deuxième, troisième et quatrième trames et la figure 9e récapitule sur un même schéma les opérations de décodage relatives à ces quatre trames ;
- les figures 10 à 12 montrent les trois exemplesde réalisation de dispositif de décodage permettant d'introduire la présentation du dispositif de décodage selon l'invention ;
- la figure 13 montre de façon plus détaillée la structure de l'élément de stockage intermédiaire et d'aiguillage de la figure 12, et les figures 14 et 15a à 15d mettent en évidence le fonctionnement de cet élément selon les étapes de fonctionnement du dispositif de décodage lui-même ;
- la figure 16 donne, de façon schématique, une vue d'ensemble des fonctions mises en oeuvre dans ces modes de réalisation de dispositif de décodage précédemment décrits et n'incluant pas la présente invention ;

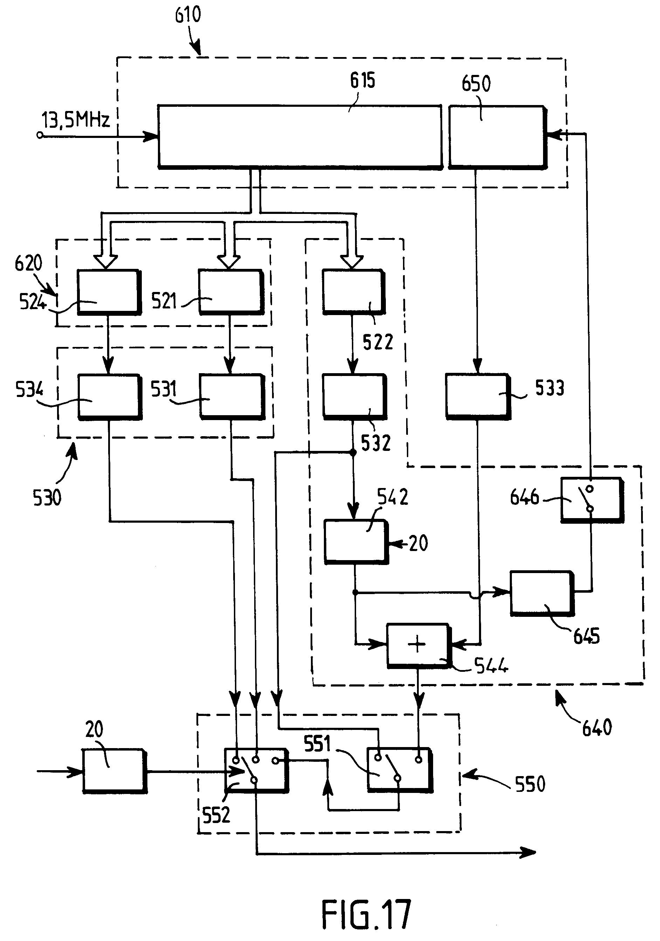

- la figure 17 donne, de façon similaire, une vue d'ensemble des mêmes fonctions dans le cas d'un dispositif de décodage selon l'invention ;

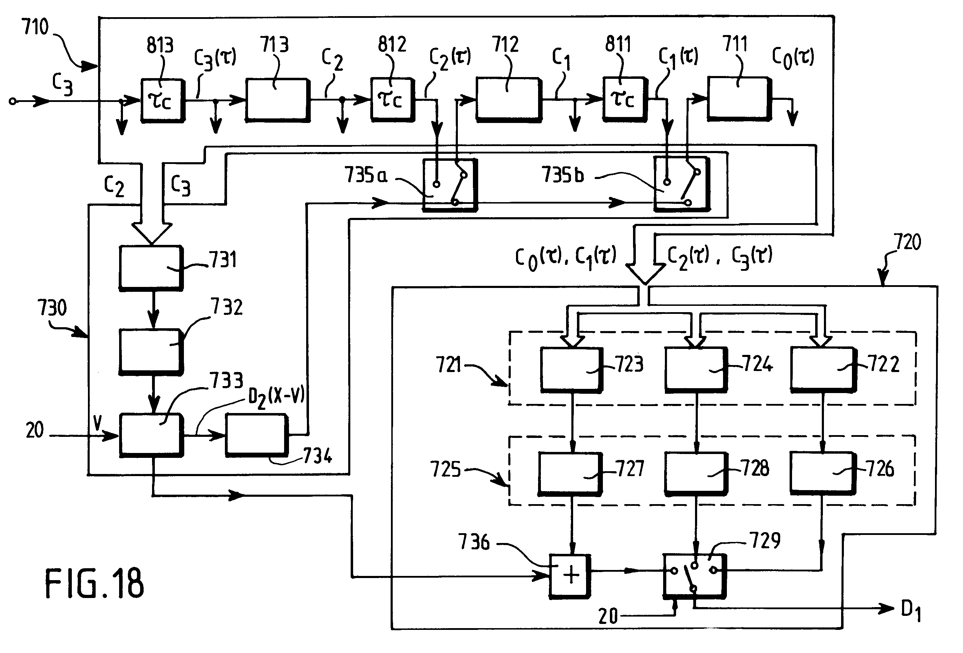

- les figures 18 à 21 montrent un exemple détaillé de réalisation d'un dispositif de décodage selon l'invention, mettant en oeuvre les fonctions décrites en référence à la figure 17.

On va tout d'abord décrire le principe sur lequel repose la structure du dispositif de décodage selon l'invention, et ce en liaison avec la figure 17, à comparer à la figure 16 pour constater les différences essentielles.

Le dispositif de décodage de la figure 17 comprend un sous-ensemble de mémorisation 610, dans lequel on note dès à présent non seulement la présence de mémoires de trame comme précédemment, regroupées en un étage de mémorisation principale 615, mais aussi la mise en place d'un étage de mémorisation auxiliaire 650, décrit de façon plus détaillée dans la suite de la présente description. Le dispositif de décodage comprend également, comme précédemment, trois voies 20 ms, 40 ms, 80 ms, mais la voie 40 ms est organisée différemment de ce qui était prévu dans le cas de la figure 16. Les voies 20 ms et 80 ms restent, elles, identiques, et sont composées respectivement, l'une, du circuit 521 de reconstitution de maille 20 ms et du circuit de filtrage 531, et l'autre, du circuit 524 de reconstitution de maille 80 ms et du circuit de filtrage 534. Les circuits 521 et 524 sont inclus comme précédemment dans un sous-ensemble de reconstitution de maille 620, et les circuits 531 et 534 dans un sous-ensemble de filtrage 530. La voie 40 ms comprend, maintenant, un seul circuit 522 de reconstitution de maille, ainsi que deux circuits de filtrage 532 et 533.

Dans le dispositif de décodage est prévu, comme précédemment, un sous-ensemble de compensation de mouvement, maintenant référencé 640 et comprenant ici les éléments suivants, à savoir : une seule mémoire, identique à la mémoire 542 et adressée par les vecteurs de déplacement transmis par l'intermédiaire du canal 20, un additionneur identique à l'additionneur 544 mais dont la deuxième entrée est cette fois reliée à la sortie du circuit de filtrage 533, un circuit de sous-échantillonnage 645 situé en sortie de la mémoire 542, et un circuit de commutation tel qu'un interrupteur 646 prévu en sortie de ce circuit de sous-échantillonnage et commandé à la fréquence de 25 Hz. La sortie de cet interrupteur 646 est fournie à l'étage de mémorisation auxiliaire 650, dont la sortie est à son tour fournie au circuit de filtrage 533 de la voie 40 ms. La sortie de l'additionneur 544 est fournie, comme dans le cas de la figure 16, à un sous-ensemble de commutation identique au sous-ensemble 550 et conservant donc cette même référence.

Ainsi, lorsque la trame à décoder est la première ou la troisième trame et que l'on veut donc obtenir en sortie du commutateur 552 la restitution des trames décodées $D_1$ et $D_3$, les circuits utilisés sont les mêmes que dans le cas de la figure 16, à savoir :
- les circuits 521, 531 de la voie 20 ms ;
- les circuits 524, 534 de la voie 80 ms ;
- les circuits 522, 532 de la voie 40 ms, suivis directement du commutateur 551 (qui est dans ce cas en position de liaison avec la sortie du circuit de filtrage 532), le commutateur 552 opérant comme précédemment la sélection entre la sortie du circuit 531 (voie 20 ms), la sortie du circuit 534 (voie 80 ms), ou la sortie du commutateur 551 (voie 40 ms, sans compensation de mouvement). Par ailleurs, la mémoire 542, adressée par les vecteurs de déplacement comme précédemment, stocke en permanence le signal de sortie du circuit de filtrage 532, puis l'envoie vers l'étage de mémorisation auxiliaire 650 par l'intermédiaire du circuit de sous-échantillonnage 645 et de l'interrupteur 646.

Lorsque la trame à décoder est maintenant la deuxième ou la quatrième trame, les circuits utilisés sont toujours les circuits 521, 531 et les circuits 524, 534, pour les voies 20 ms et 80 ms respectivement. Par contre, le commutateur 551 est maintenant en position de liaison (non représentée sur la figure 17) avec la sortie de l'additionneur 544. De ce fait, sont actives, dans ces étapes de décodage, les deux branches de la voie 40 ms, c'est-à-dire d'une part celle qui, reliée à une première entrée de l'additionneur 544, inclut le circuit 522 de reconstitution de maille, le circuit de filtrage 532 et la mémoire 542, et d'autre part celle qui, reliée à la deuxième entrée de l'additionneur 544, inclut le circuit 533 de filtrage des signaux ayant traversé l'étage de mémorisation auxiliaire 650.

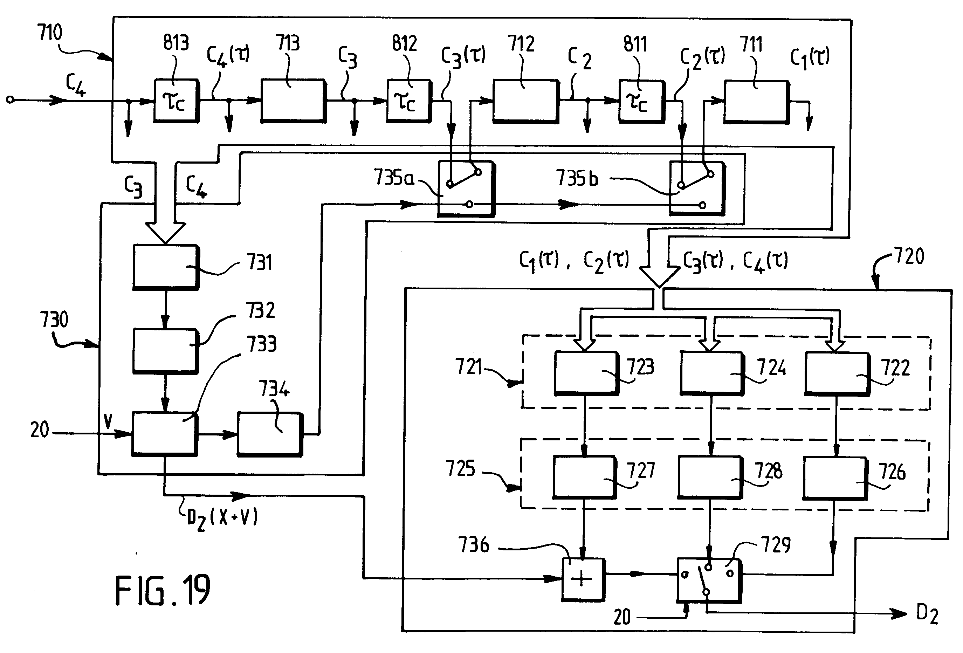

On a ainsi décrit une structure de principe d'un dispositif de décodage selon l'invention, mais, bien entendu, l'invention n'est pas limitée à un tel mode de réalisation. On peut notamment proposer une version améliorée d'un tel dispositif, dans laquelle l'étage de mémorisation auxiliaire est en fait constitué de deux des mémoires de trames prévues dans l'étage de mémorisation principale 615 du dispositif de décodage. La réalisation détaillée correspondante est maintenant décrite en référence à la figure 18, ainsi qu'aux figures 19 à 21 similaires.

Le dispositif de décodage de la figure 18, dont le fonctionnement sera expliqué en détail plus loin, comprend tout d'abord un sous-ensemble de mémorisation 710 des signaux d'entrée. Ce sous-ensemble 710, destiné à recevoir les signaux de télévision préalablement codés et transmis et les retarder de façon appropriée avant leur aiguillage sélectif (en fonction de la trame à décoder) vers les autres circuits du dispositif de décodage, comprend un montage série d'entrée constitué ici de trois mémoires de trame 711, 712, 713. Comme indiqué sur la figure 18, ces trois mémoires sont associées à trois circuits à retard 811 à 813, et elles permettent de disposer, à leur sortie, pour une trame courante $C_{n+3}$ à l'entrée du dispositif de décodage, des trois trames précédentes $C_{n+2}$, $C_{n+1}$, $C_n$ séparées respectivement par des intervalles de temps de durée 20 millisecondes.

Le dispositif de décodage de la figure 18 comprend également un sous-ensemble 720 de reconstitution de mailles et de filtrage. Ce sous-ensemble 720, destiné à opérer la restitution des trames des images d'origine par reconstitution successive des blocs d'image et en fonction du rythme de transmission des signaux codés, comprend un étage 721 de reconstitution de mailles d'échantillonnage suivi d'un étage 725 de filtrage spatial.

L'étage 721 comprend un premier, un deuxième et un troisième circuit de reconstitution de maille, 722, 723, 724 respectivement, prévus pour la restitution de maille aux premier, deuxième et troisième rythmes respectivement (20, 40, 80 ms). Cet étage 721 reçoit quatre trames successives délivrées par le sous-ensemble 710. L'étage 725 comprend un premier, un deuxième et un troisième circuit 726, 727, 728 de filtrage des signaux de sortie des circuits 722 à 724 respectivement. Un commutateur 729 situé en aval de ces trois circuits de filtrage 726 à 728 permet de sélectionner, en fonction du signal de décision transmis par le canal d'assistance numérique 20, celle des sorties de ces circuits de filtrage qui correspond au rythme de transmission sélectionné pour le bloc considéré.

Le dispositif de décodage de la figure 18 comprend enfin un sous-ensemble 730 de compensation de mouvement. Ce sous-ensemble 730 reçoit les informations de mouvement transmises par le canal d'assistance numérique 20 et est destiné, alternativement, à stocker de façon temporaire un signal de compensation de mouvement ou bien à participer, à l'aide de ce signal, à une restitution de trame non transmise avec compensation de mouvement. La première des deux étapes, l'étape de stockage temporaire, prend place pendant que le dispositif de décodage est en cours de restitution des trames transmises décodées, tandis que la deuxième des deux étapes, l'étape de restitution avec compensation de mouvement, prend place pendant que le dispositif de décodage est en cours de restitution de ces trames non transmises. Le sous-ensemble 730 de compensation de mouvement comprend successivement un circuit 731 de reconstitution de maille au deuxième rythme, un circuit 732 de filtrage de la sortie du circuit 731, une mémoire 733 recevant les informations de mouvement transmises, un circuit de sous-échantillonnage 734, un circuit de commutation 735 comprenant lui-même deux commutateurs 735a et 735b en parallèle, et un étage de mémorisation auxiliaire comprenant ici les deux mémoires de trame 711 et 712. La durée totale du traitement dans le sous-ensemble 730 est égale à $\tau$, et cette valeur $\tau$ est celle du retard apporté par chacun des circuits à retard 811 à 813. Les deux mémoires 711 et 712 jouent le rôle de l'étage de mémorisation auxiliaire 650 précédemment mentionné, en référence à la figure 17.

Le fonctionnement du dispositif de décodage de la figure 18 va maintenant être décrit, en considérant successivement les différentes étapes de décodage correspondant à la reconstruction des différentes trames, notées $D_{n+1}$, $D_{n+2}$, $D_{n+3}$, $D_{n+4}$. Ces étapes se reproduisant de façon périodique, on ne décrira bien entendu que quatre d'entre elles qui correspondent par exemple au décodage permettant d'obtenir les quatre trames décodées $D_1$, $D_2$, $D_3$, $D_4$. La description ainsi faite peut être généralisée.

La première étape décrite est celle de la restitution de la trame $D_1$, qui serait identique pour la restitution de la trame $D_5$, $D_9$,..., $D_{4n+1}$, ... etc... Les références C portées en sortie des mémoires désignent ci-après les trames d'entrée successives transmises, telles que reçues par le dispositif de décodage, tandis que les références $C(\tau)$ désignent de façon similaire ces mêmes trames d'entrée mais retardées -à l'aide des circuits à retard 811 à 813 associés aux mémoires 711 à 713- de la durée $\tau$ correspondant au temps de traitement dans le sous-ensemble 730.

Dans cette première étape de fonctionnement, dans laquelle $C_3$ est la trame courante présente à l'entrée du dispositif de décodage, les circuits 722, 723, 724 de reconstitution de maille de l'étage 721 du sous-ensemble 720 fournissent respectivement aux circuits de filtrage 726, 727, 728 de l'étage 725 dudit sous-ensemble trois signaux obtenus en disposant les contenus (fournis par le sous-ensemble 710) des mémoires de trame 711, 712, 713 selon les mailles d'échantillonnage prévues pour chaque rythme de transmission (20, 40, 80 ms) et représentées sur les figures 2a, 3a, 4a respectivement (par rapport auxdits rythmes). Plus précisément, la trame $D_1$ à reconstruire sera obtenue à partir des échantillons provenant de $C_1(\tau)$, $C_2(\tau)$ si le rythme de transmission était 40 ms, et à partir des échantillons de $C_0(\tau)$, $C_1(\tau)$, $C_2(\tau)$, $C_3(\tau)$ si le rythme de transmission était 80 ms. En sortie des circuits de filtrage 726, 727, 728, qui permettent la réinsertion des échantillons manquants dans les mailles d'échantillonnage, le commutateur 729 sélectionne, en fonction du signal de décision qu'il reçoit, celle de ces trois sorties qui est associée au rythme de transmission sélectionné. Sur la sortie du commutateur 729, qui est aussi la sortie du sous-ensemble 720 et celle du dispositif de décodage, est ainsi progressivement reconstruite la trame décodée $D_1$ (1250 lignes, 1440 points/ligne).

Pendant cette première étape de fonctionnement, le sous-ensemble 730 de compensation de mouvement assure la reconstruction d'une première trame demi-compensée de la manière suivante :

(a) par reconstitution de la maille d'échantillonnage correspondant au rythme 40 ms, à l'aide du circuit 731 de reconstitution de maille recevant les trames $C_2$ et $C_3$ ;

(b) par filtrage spatial à l'aide du circuit de filtrage 732, identique au circuit de filtrage 727 et destiné comme celui-ci à la réinsertion des échantillons qui manquent dans la maille d'échantillonnage 40 ms ;

(c) par demi-compensation de mouvement à l'aide de la mémoire 733 qui reçoit les informations de mouvement (vecteurs de déplacement V) transmises par le canal 20 et fournit une trame $D_2(X-V)$ dite première trame demi-compensée et dont chaque échantillon, de coordonnées X, provient de la trame de sortie du circuit de filtrage 732, décalée en en prenant les échantillons (X-V) respectivement ;

(d) par sous-échantillonnage en quinconce ligne de la première trame demi-compensée ainsi obtenue, ce sous-échantillonnage réalisé par le circuit 734 étant destiné à modifier le rythme desdits échantillons (X-V) de cette première trame demi-compensée avant le stockage de celle-ci dans l'étage de mémorisation auxiliaire, constitué, on l'a vu, des mémoires 711 et 712 déconnectées provisoirement du montage série d'entrée (711, 811, 712, 812, 713, 813) et reconnectées en parallèle en sortie du circuit 734 à l'aide d'une position dite parallèle du circuit de commutation 735 opérant à l'entrée des mémoires 711 et 712, entre la sortie du circuit à retard 811 et l'entrée de la mémoire 711 et entre la sortie du circuit à retard 812 et l'entrée de la mémoire 712 (cette modification des connexions des mémoires 711 et 712 est opérée sur commande -non représentée pour ne pas surcharger la figure, mais qui agit sur le circuit de commutation 735- du signal de décision, exclusivement lorsque ce signal de décision indique que le rythme 40 ms a été sélectionné, et les mémoires 711 et 712 contiennent à nouveau les échantillons des signaux d'entrée dès que le signal de décision, indiquant la sélection des rythmes 20 ms ou 80 ms, a commandé le retour du circuit de commutation 735 dans sa position dite série).

Les opérations qui se produisent pendant la première étape de décodage sont ainsi terminées. La deuxième étape est celle de la restitution de la trame $D_2$, qui serait, comme indiqué précédemment, identique pour la restitution de la trame $D_6$, $D_{10}$,..., $D_{4n+2}$,... etc...

Dans cette deuxième étape de fonctionnement, décrite en référence à la figure 19 et dans laquelle, dans l'exemple décrit, $C_4$ est la trame courante présente à l'entrée du dispositif de décodage, $C_1$ à $C_3$ les trames présentes en sortie des mémoires 711 à 713 et $C_2(\tau)$ à $C_4(\tau)$ les trames retardées présentes à l'entrée desdites mémoires, la reconstruction va cette fois être obtenue à partir des échantillons provenant de $C_2(\tau)$ pour le rythme de transmission de 20 ms, de $C_3(\tau)$, $C_4(\tau)$ pour le rythme de 40 ms, et de $C_1(\tau)$, $C_2(\tau)$, $C_3(\tau)$, $C_4(\tau)$ pour le rythme de 80 ms.

Pendant cette deuxième étape de fonctionnement, le sous-ensemble 730 de compensation de mouvement assure la reconstruction d'une deuxième trame demi-compensée de la manière suivante :

(a) par reconstitution de la maille 40 ms, comme précédemment à l'aide du circuit 731 de reconstitution de maille, recevant les trames $C_3$ et $C_4$ cette fois ;

(b) par filtrage spatial, comme précédemment à l'aide du circuit de filtrage 732 réinsérant les échantillons manquants ;

(c) par demi-compensation de mouvement à l'aide de la mémoire 733 qui, cette fois, fournit à partir des vecteurs V une trame $D_2(X+V)$ dite deuxième trame demi-compensée obtenue en prélevant en mémoire l'intensité des échantillons X+V et en l'attribuant aux échantillons de coordonnées X ;

(d) par addition, dans un additionneur 736 prévu en sortie de la mémoire 733, de cette deuxième trame demi-com pensée envoyée sur une entrée dudit additionneur et de la première trame demi-compensée stockée au cours de l'étape précédente dans l'étage de mémorisation auxiliaire, ladite première trame

18

demi-compensée étant restituée sur l'autre entrée dudit additionneur par l'ensemble constitué par le circuit 723 de reconstitution de maille et le circuit 727 de filtrage, à partir des échantillons mémorisés dans les mémoires 711 et 712 pendant les dernières 20 millisecondes, et ledit additionneur 736 fournissant sur sa sortie la trame $D_2$ compensée résultant de la moyenne des deux trames demi-compensées $D_2(X-V)$ et $D_2(X+V)$.

Le commutateur 729 sélectionne alors, en fonction du signal de décision indiquant comme précédemment le rythme 20, 40 ou 80 ms, celui des trois signaux de sortie du circuit de filtrage 726 (rythme 20 ms), de l'additionneur 736 (rythme 40 ms), ou du circuit de filtrage 728 (rythme 80 ms) qui correspond au rythme indiqué, et délivre sur sa sortie la trame décodée $D_2$ (1250 lignes, 1440 points/ligne).

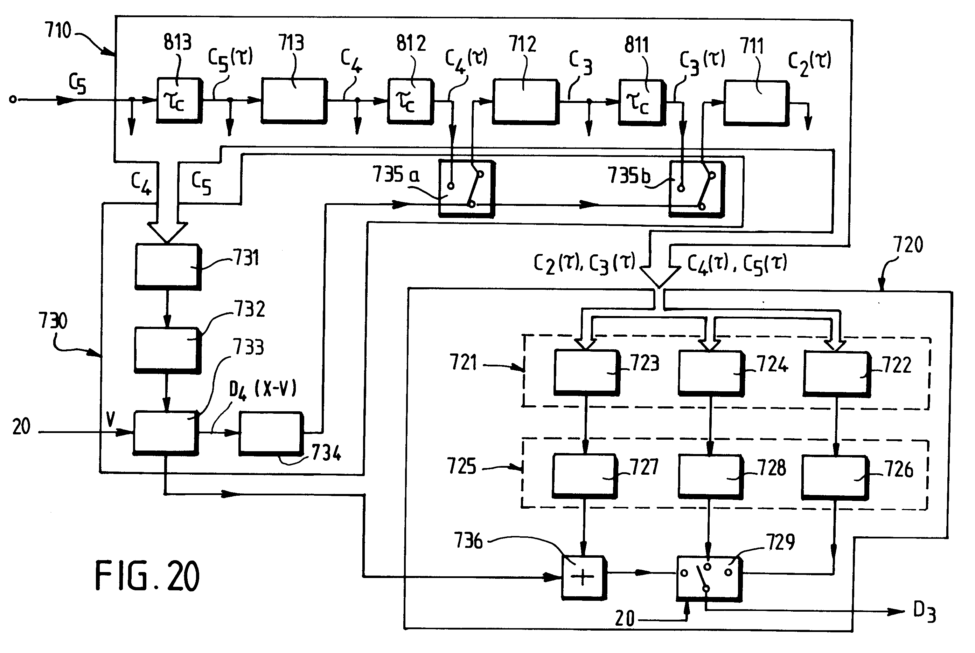

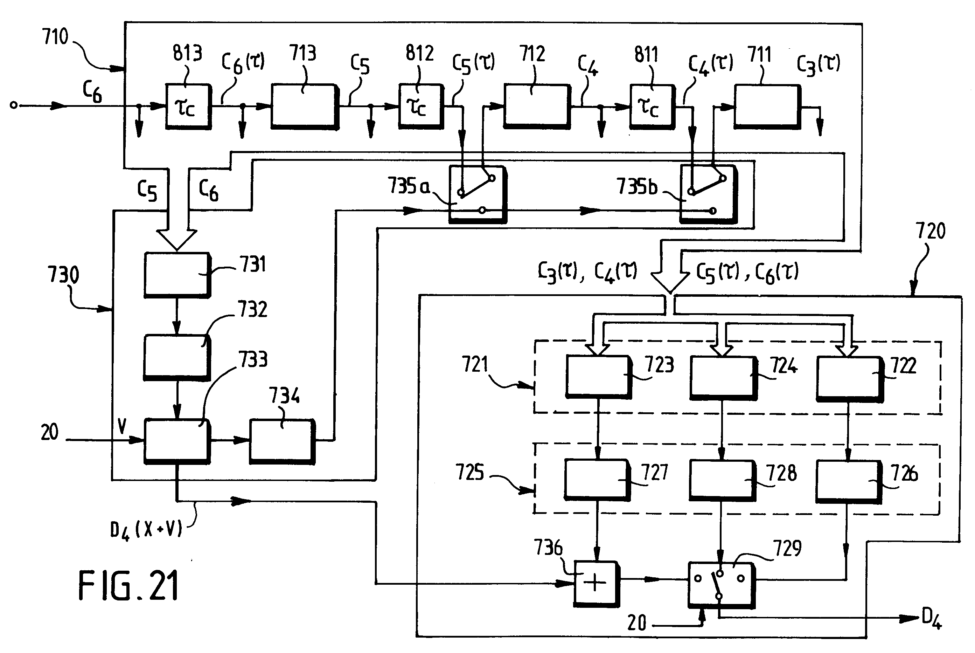

La troisième étape est celle de la restitution de la trame $D_3$, qui est, en fait, identique à celle de restitution de la trame $D_1$, $C_5$ étant cette fois la trame courante présente à l'entrée du dispositif de décodage. Cette troisième étape correspond à la figure 20, où apparaît, de façon similaire à ce qui a été décrit pour la première étape, une première trame demi-compensée $D_4(X-V)$, stockée dans l'étage de mémorisation auxiliaire et rappelée au cours de la quatrième étape. Cette quatrième étape, celle de la restitution de la trame $D_4$, est identique à celle de restitution de la trame $D_2$, $C_6$ étant dans ce cas la trame courante présente à l'entrée du dispositif. La quatrième étape correspond à la figure 21, sur laquelle apparaît, de façon similaire à ce qui a été décrit pour la deuxième étape, une deuxième trame demi-compensée $D_4(X+V)$ à additionner à la première trame demi-compensée $D_4(X-V)$ dans l'additionneur 736.

Le fonctionnement du dispositif de décodage se déroule donc selon une succession d'étapes où alternent régulièrement d'une part des premières étapes identiques de restitution des trames $D_1$, $D_3$, $D_5$, $D_7$, ..., etc..., prévoyant notamment le stockage temporaire d'une première trame demi-compensée déterminée en quelque sorte par anticipation, et d'autre part des deuxièmes étapes identiques de restitution des trames $D_2$, $D_4$, $D_6$, $D_8$,..., etc... prévoyant la détermination d'une deuxième trame demi-compensée et son addition à la première trame demi-compensée préalablement déterminée. Bien évidemment, l'additionneur 736 qui effectue cette addition au cours des étapes du deuxième type doit, pendant les étapes du premier type qui les précèdent, être neutralisé en maintenant à une valeur nulle le signal présent sur celle des connexions d'entrée de cet additionneur qui est reliée à la sortie de la mémoire 733, l'autre connexion d'entrée de l'additionneur recevant dans tous les cas, aussi bien au cours des premières étapes que des deuxièmes, la sortie du circuit de filtrage 727 de la branche 40 ms.

## Revendications

1. Dispositif de décodage de signaux de télévision préalablement codés à l'émission en vue d'une transmission sur la base d'une fréquence de trame déterminée et par l'intermédiaire d'un canal à bande passante limitée impliquant un traitement de réduction de la quantité d'informations à transmettre, de telle façon que ladite transmission soit opérée par bloc soit à un premier rythme à ladite fréquence, soit à un deuxième rythme à une fréquence deux fois plus faible, soit à un troisième rythme à une fréquence quatre fois plus faible, des informations relatives au mouvement et au rythme sélectionné ayant été également transmises, caractérisé en ce qu'il comprend :

(A) un sous-ensemble de mémorisation, comprenant lui-même des mémoires de trame en série et prévu pour recevoir, par bloc, lesdits signaux et les retarder de façon appropriée avant un aiguillage sélectif vers les voies de décodage dudit dispositif ;

(B) un sous-ensemble de reconstitution de mailles et de filtrage, agencé pour opérer, par bloc et en fonction dudit rythme sélectionné, la restitution des trames des images d'origine et comprenant lui-même une première, une deuxième et une troisième voie de décodage, prévues pour recevoir des trames disponibles dans ledit sous-ensemble de mémorisation et comprenant elles-mêmes chacune un circuit de filtrage spatial ;

(C) un sous-ensemble de compensation de mouvement, prévu pour recevoir lesdites informations de mouvement et, alternativement, stocker de façon temporaire un signal dit de compensation de mouvement pendant la restitution de trames de parité déterminée ou participer, à l'aide dudit signal de compensation de mouvement, à la restitution des trames de parité opposée, ledit sous-ensemble comprenant lui-même une quatrième voie de décodage avec compensation de mouvement, prévue en sortie du sous-ensemble de mémorisation et comprenant un circuit de filtrage spatial, une mémoire dont l'adressage est réalisé par lesdites informations de mouvement, et, en sortie de cette mémoire, deux branches en parallèle comprenant l'une un circuit de commutation et l'autre une connexion de liaison avec une première entrée d'un additionneur, le circuit de filtrage spatial de la deuxième voie étant couplé avec une deuxième entrée dudit additionneur ;

(D) un commutateur prévu pour sélectionner selon le rythme de transmission correspondant à chaque bloc la sortie de la première voie, une sortie en provenance de la deuxième voie, ou la sortie de la troisième voie.

2.  Dispositif de décodage selon la revendication 1, caractérisé en ce que le circuit de commutation comprend un interrupteur et en ce que le sous-ensemble de mémorisation comprend un circuit de mémorisation auxiliaire prévu en série avec ledit interrupteur.

3.  Dispositif de décodage selon la revendication 1, caractérisé en ce que le circuit de commutation comprend deux commutateurs en parallèle, et en ce que des première et deuxième mémoires de trame du sous-ensemble de mémorisation sont disposées en série chacune avec l'un desdits commutateurs.

4.  Dispositif de décodage selon l'une des revendications 1 à 3, caractérisé en ce que le circuit de commutation est précédé d'un circuit de sous-échantillonnage dans un rapport 1/2.

## Patentansprüche

1.  Anordnung zur Decodierung von Fernsehsignalen, die vorher am Senderende codiert worden sind in bezug auf Übertragung mit einer vorbestimmten Teilbildfrequenz über einen analogen Kanal mit beschränktem Durchlaßband, was eine Verarbeitung erfordert zur Verringerung der zu übertragenden Informationsmenge derart, daß diese Übertragung entweder mit einer ersten Rate mit der genannten Teilbildfrequenz erfolgt oder mit einer zweiten Rate mit einer zweimal niedrigeren Teilbildfrequenz oder aber mit einer dritten Rate mit einer viermal niedrigeren Teilbildfrequenz, wobei Informationsanteile über die Bewegung und die selektierte Rate ebenfalls übertragen werden, dadurch gekennzeichnet, daß die Anordnung die nachfolgenden Elemente aufweist:
    (A) eine Speicher-und-Umschalt-Hilfseinheit mit reihengeschalteten Teilbildspeichern zum blockweisen Empfangen der genannten Signale und zum auf geeignete Art und Weise Verzögern derselben vor einer selektiven Umschaltung zum Decodieren der Strecken der genannten Decodieranordnung;
    (B) eine Musterwiederherstellungs-und-Filter-Hilfseinheit zum Durchführen der Wiederherstellung der Teilbilder der ursprünglichen Bilder zu Bilderblöcken und als Funktion der genannten selektierten Übertragungsrate, mit ersten, zweiten und dritten Decodierstrecken zum Empfangen von Teilbildern, die in der genannten Speicherhilfeinheit vorhanden sind, wobei jede Decodierstrecke ein Rauminterpolationsfilter aufweist:
    (C) eine Bewegungskompensations-Hilfseinheit zum Empfangen der genannten Bewegungskompensationsanteile zur wechselweisen vorübergehenden Speicherung eines Bewegungskompensationssignals während der Wiederherstellung der Teilbilder einer vorbestimmten Parität, oder zum Gebrauch des genannten Bewegungskompensationssignals bei der Wiederherstellung von Teilbildern der entgegengesetzten Parität, wobei die genannten Hilfeinheit eine vierte Decodierstrecke mit Bewegungskompensation aufweist, die mit einem Ausgang der genannten Speicherhilfseinheit gekoppelt ist und ein Rauminterpolationsfilter und einen Speicher aufweist, der durch die genannten Bewegungskompensationsanteile adressiert ist, und am Ausgang dieses Speichers zwei parallelgeschaltete Zweige mit einer Verbindung zu einem ersten Eingang eines Addierers, wobei das Rauminterpolationsfilter der genannten zweiten Decodierstrecke mit einem zweiten Eingang des genanten Addierers gekoppelt ist; und
    (D) einen Umschalter zum Selektieren, entsprechend der Übertragungsrate der jeweiligen Blöcke, eines Ausgangs der ersten Strecke, eines Ausgangs der zweiten Strecke oder eines Ausgangs der dritten Strecke.

2.  Decodieranordnung nach Anspruch 1, dadurch gekennzeichnet, daß der Umschaltkreis einen Unterbrecher aufweist und daß die Speicherhilfseinheit eine mit dem genannten Unterbrecher in Reihe geschaltete Hilfsspeicherstufe aufweist.

3.  Decodieranordnung nach Anspruch 1, dadurch gekennzeichnet, daß der Umschaltkreis zwei parallelgeschaltete Umschalter aufweist und daß erste und zweite Teilbildspeicher der Speicherhilfseinheit mit je einem der genannten Unterbrecherschalter in Reihe geschaltet sind.

4.  Decodieranordnung nach einem der Ansprüche 1, 2 oder 3, dadurch gekennzeichnet, daß dem Umschaltkreis eine Hilfsabtastschaltung vorgeschaltet ist, die um einen Faktor 2 hilsweise abtastet.

## Claims

1. An arrangement for decoding television signals which were previously encoded at the transmission end with a view to their transmission at a predetermined field frequency via a limited passband channel which involves a processing operation for reducing the quantity of information components to be transmitted, in such a manner that said transmission is effected block-wise either at a first rate at said field frequency or at a second rate at a twice lower field frequency or at a third rate at a four times lower field frequency, information components about the motion and at the selected rate being also transmitted, characterized in that it comprises:

   (A) a storage sub-assembly including field memories arranged in series and being coupled to receive block-wise said signals and to delay them in an appropriate manner before a selective switching to decoding paths of said decoding arrangement;

   (B) a pattern recovery and filtering sub-assembly for effecting the recovery of the fields of the original pictures, in picture blocks and as a function of said selected transmission rate, and comprising first, second and third decoding paths coupled to receive fields available in said storage sub-assembly, each decoding path comprising a spatial interpolation filter;

   (C) a motion compensation sub-assembly coupled to receive said motion information components and, alternately, temporarily storing a motion compensation signal during the recovery of fields of a predetermined parity, or participating using said motion compensation signal, in the recovery of fields of the opposite parity, said sub-assembly comprising a fourth decoding path with motion compensation, coupled to an output of said storage sub-assembly and comprising a spatial interpolation filter, a memory which is addressed by said motion compensation information components, and, at the output of this memory, two parallel-arranged branches one of which comprises a change-over circuit and the other branch comprising a connecting link to a first input of an adder, the spatial interpolation filter of said second decoding path being coupled to a second input of said adder; and

   (D) a change-over switch for selecting, in accordance with the transmission rate corresponding to each block, an output of the first path, an output of the second path or an output of the third path.

2. A decoding arrangement as claimed in Claim 1, characterized in that the change-over circuit includes an interrupter and in that the storage sub-assembly includes an auxiliary storage stage arranged in series with said interrupter.

3. A decoding arrangement as claimed in Claim 1, characterized in that the change-over circuit comprises two parallel-arranged change-over switches and in that first and second field memories of the storage sub-assembly are each arranged in series with one of the said interrupters change-over switches.

4. A decoding arrangement as claimed in any of Claims 1 to 3, characterized in that the change-over circuit is preceded by a sub-sampling circuit sub-sampling in a ratio 1/2.

FIG. 1

FIG. 2a          FIG. 2b          FIG. 2c

25 Hz

25 Hz

25 Hz

FIG. 3a

FIG. 3b

FIG. 3c

EP 0 428 216 B1

12,5 Hz

12,5 Hz

FIG. 4a

FIG. 4b

EP 0 428 216 B1

FIG. 5

FIG. 6

FIG. 7

FIG. 8

FIG. 9b

FIG. 9a

FIG. 9c

FIG. 9d

EP 0 428 216 B1

FIG. 9e

FIG. 10

FIG. 11

FIG. 12

FIG.13

FIG.14

FIG.15a

FIG.15b

FIG. 15c

FIG. 15d

510

13,5 MHz

524  521  522  523  520

534  531  532  533  530

542  543  540

544

20

551  550

552

FIG.16

FIG.17

FIG.18

FIG. 19

FIG. 20

FIG. 21